(19) Europäisches Patentamt
European Patent Office
Office européen des brevets

(11) EP 2 821 438 B1

(12) **EUROPEAN PATENT SPECIFICATION**

(45) Date of publication and mention of the grant of the patent:
**19.10.2016 Bulletin 2016/42**

(21) Application number: **13754859.0**

(22) Date of filing: **26.02.2013**

(51) Int Cl.:
***C08L 67/00*** *(2006.01)* ***C08J 3/20*** *(2006.01)*
***C08K 3/34*** *(2006.01)*

(86) International application number:
**PCT/JP2013/001091**

(87) International publication number:
**WO 2013/128887 (06.09.2013 Gazette 2013/36)**

# (54) LIQUID CRYSTAL POLYESTER RESIN COMPOSITION

FLÜSSIGKRISTALLPOLYESTERHARZZUSAMMENSETZUNG

COMPOSITION DE RÉSINE POLYESTER À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.02.2012 JP 2012043347**
**12.06.2012 JP 2012132448**

(43) Date of publication of application:
**07.01.2015 Bulletin 2015/02**

(73) Proprietor: **Toray Industries, Inc.**
**Tokyo, 103-8666 (JP)**

(72) Inventors:
- **HAMAGUCHI, Mitsushige**
**Nagoya-shi**
**Aichi 455-8502 (JP)**
- **MIYAMOTO, Kohei**
**Nagoya-shi**
**Aichi 455-8502 (JP)**
- **UMETSU, Hideyuki**
**Nagoya-shi**
**Aichi 455-8502 (JP)**

(74) Representative: **Webster, Jeremy Mark**
**Mewburn Ellis LLP**
**City Tower**
**40 Basinghall Street**
**London EC2V 5DE (GB)**

(56) References cited:
**WO-A1-2012/090407**
**WO-A1-2012/137271**
**JP-A- H03 167 252**
**JP-A- 2001 089 581**
**JP-A- 2006 089 714**
**JP-A- 2007 169 379**
**JP-A- 2009 179 693**
**JP-A- 2011 093 973**
**JP-A- 2012 021 147**
**US-A1- 2011 073 807**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 821 438 B1

Printed by Jouve, 75001 PARIS (FR)

## Description

### Technical Field

The present invention relates to a liquid crystalline polyester resin composition that has good flowability and is capable of producing a molded product having low warpage, high strength and high toughness such as flexural strain at break and impact strength, and a molded product using the same.

### Background Art

In recent years, with increased demand for high-performance plastics, lots of polymers having various novel properties have been developed and come on the market. Among these polymers, especially noted are liquid crystalline resins such as liquid crystalline polyester having optical anisotropy characterized by the parallel alignment of molecular chain and having good moldability and good mechanical properties. The application of such liquid crystalline resins has been expanding to mechanical components and electric and electronic components. The liquid crystalline resins are especially preferably used for electric and electronic components such as connectors that need good flowability.

Accompanied with the recent downsizing and weight reduction of devices, these mechanical components and electric and electronic components are more likely to be thin-walled and have complicated shapes. Molded products made from liquid crystalline resin compositions are needed to have high strength. Pin press-fitting connector are, on the other hand, needed to have both toughness and strength, in order to suppress the product from being cracked during press-fitting. There is accordingly a need to develop a material that achieves a good balance of the conflicting properties, i.e., strength and toughness.

In order to enhance the strength of a thin-walled molded product or a molded product in a complicated shape, liquid crystalline polymer compositions have been proposed to include a filler having a specified shape and a specified particle size (for example, plate-like filler) (see, for example, Patent Documents 1 to 4). These proposed techniques, however, cause the toughness to be decreased by reinforcement of the filler and accordingly fail to provide sufficiently high toughness and to achieve a good balance of the strength with the toughness. Other proposed techniques are: a method of using a liquid crystalline polymer having a specified structure to improve the orientation of the liquid crystalline polymer during molding (see, for example, Patent Document 5) and a composition including a plate-like filler in addition to this polymer (see, for example, Patent Document 6). These, however, fail to sufficiently meet the requirement of a good balance of significantly low warpage and strength with toughness. These prior art techniques also fail to sufficiently meet the requirements of tribological property and flexural fatigue characteristic in use of mechanical components and electric and electronic components. JP 2012021147 discloses molded connectors obtained from a composition comprising: 100 parts of liquid crystal polyester obtained by polycondensation of 6,60 mol of p-hydroxybenzoate, 1,89 mol of 4,4'-dihydroxydiphenyl, 0,81 mol of hydroquinone, 1,76 mol of terephthalic acid, 0,95 mol of isophthalic acid and 1,03 equivalents of acetic anhydride; and 25 parts of mica having volume-average diameter of 19 $\mu$m, number-average thickness of 0,3 $\mu$m and aspect ratio 60.

There is accordingly a need for further improvement.

### Prior Art Documents

### Patent Documents

Patent Document 1: US Patent No. 6797198
Patent Document 2: JP H04-202558A
Patent Document 3: JP 2003-321598A
Patent Document 4: JP 2012-21147A
Patent Document 5: JP 2004-352862A
Patent Document 6: JP 2009-179693A

### Summary of the Invention

### Problems to be Solved by the Invention

With recent downsizing and precision enhancement of molded products, there is a need to achieve a good balance of high strength and low warpage due to the reinforcement effects of a filler with high toughness to be resistant

to pin press fitting. No prior art technologies have, however, sufficiently met this need. An object of the invention is accordingly to provide a liquid crystalline polyester resin composition used to produce a molded product having high strength and low warpage due to the reinforcement effects of a filler, high toughness to be resistant to pin press-fitting, good tribological property and good flexural fatigue characteristic.

Means for Solving the Problems

The inventors have found the following as the results of intensive studies to solve the above problems. Specifically the inventors have found that a liquid crystalline polyester resin composition including a liquid crystalline polyester resin having a specified terminal group composition and mica having a specified shape and a specified particle size has high flexural strength and low warpage due to the high reinforcement effects of the mica. Additionally, the inventors have found that the liquid crystalline polyester resin composition also has high toughness and good flowability. Furthermore, the inventors have found that the liquid crystalline polyester resin composition also achieves a good balance of these properties and has good tribological property and good flexural fatigue characteristic.

Specifically, the following describes one aspect of the invention.

(1) There is provided a liquid crystalline polyester resin composition, comprising: 100 parts by weight of a liquid crystalline polyester (A) having a ratio (a)/[(a)+(b)] of an amount of terminal hydroxyl group (a) to a sum of the amount of terminal hydroxyl group (a) and an amount of terminal acetyl group (b) which is 0.70 to 1.00; and 10 to 100 parts by weight of a mica (B), wherein the mica (B) included in the liquid crystalline polyester rein composition has a volume-average particle size of 10 to 50 $\mu$m, and the mica (B) has an aspect ratio of 50 to 100.

(2) In the liquid crystalline polyester resin composition according to (1), the liquid crystalline polyester (A) has $\Delta S$ (entropy of melting) defined by Equation 1 of 1.0 to $3.0 \times 10^{-3}$ J/g·K:

$$\Delta S = \Delta Hm / Tm \qquad [1]$$

(where $\Delta Hm$ denotes a melting heat quantity, and Tm denotes a melting point).

(3) In the liquid crystalline polyester resin composition according to (1) or (2), the liquid crystalline polyester (A) has structural units (I), (II), (III), (IV) and (V) given below. The structural unit (I) is 68 to 80 mol% relative to a sum of the structural units (I), (II) and (III), the structural unit (II) is 55 to 75 mol% relative to a sum of the structural units (II) and (III), the structural unit (IV) is 60 to 85 mol% relative to a sum of the structural unit (IV) and (V), and the sum of the structural units (II) and (III) is substantially equimolar with the sum of the structural units (IV) and (V).

[Chem. 1]

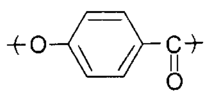
(I)

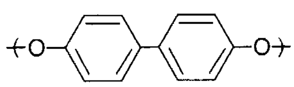
(II)

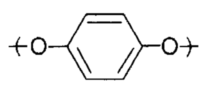
(III)

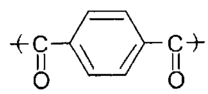
(IV)

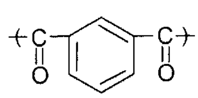
(V)

(4) In the liquid crystalline polyester resin composition according to any of (1) to (3), the mica (B) included in the

liquid crystalline polyester resin composition has a number-average thickness of 0.15 μm to 0.90 μm.

(5) In the liquid crystalline polyester resin composition according to any of (1) to (4), the mica (B) included in the liquid crystalline polyester resin composition has a ratio of the volume-average particle size to a median size measured by cumulative particle size distribution of 1.05 to 1.30.

(6) The liquid crystalline polyester resin composition according to any of (1) to (5) further comprises 5 to 70 parts by weight of a talc (D) relative to 100 parts by weight of the liquid crystalline polyester (A).

(7) There is provided a production method of the liquid crystalline polyester resin composition according to any of (1) to (6). The production method of the liquid crystalline polyester resin composition melt-kneads at least the liquid crystalline polyester (A) and the mica (B) using a screw arrangement including at least one kneading disk. The production method of the liquid crystalline polyester resin composition controls a melt viscosity at a maximum shear rate (γ) of a kneading disk unit in an extruder calculated from a temperature during melt-kneading and a screw rotation speed during kneading according to Equation 2 to 30 Pa·s to 200 Pa·s:

$$\gamma = \pi \times D \times N / (60 \times c) \qquad [2]$$

(where D represents a screw diameter, N represents a screw rotation speed and c represents a clearance of the kneading disk unit).

(8) There is provided a molded product produced by injection molding the liquid crystalline polyester resin composition according to any of (1) to (6).

(9) There is provided a connector made from the liquid crystalline polyester resin composition according to any of (1) to (6).

Advantageous Effects of Invention

The liquid crystalline polyester resin composition of the invention is used to produce a molded product having low warpage and high strength due to the high reinforcement effects of mica, high toughness such as flexural strain at break and impact strength, good tribological property and good flexural fatigue characteristic. The liquid crystalline polyester resin composition of the invention is favorably used for molded products that need the strength and the toughness or more specifically for connectors.

Brief Description of the Drawings

[Figure 1] Fig. 1 is a conceptual diagram illustrating a measurement site of warpage of a molded product.

Mode for Carrying Out the Invention

The following describes embodiments of the invention in detail.

The liquid crystalline polyester according to the embodiment of the invention is a polyester called thermotropic liquid crystalline polymer showing optical anisotropy in the molten state. The terminal groups of the liquid crystalline polyester resin are terminal hydroxyl group, terminal acetyl group and terminal carboxyl group. The liquid crystalline polyester has a ratio (a)/[(a)+(b)] of amount of terminal hydroxyl group (a) [unit: equivalent/ ($g \cdot 10^{-6}$)] to sum of the amount of terminal hydroxyl group (a) [unit: equivalent/ ($g \cdot 10^{-6}$)] and amount of terminal acetyl group (b) [unit: equivalent/ ($g \cdot 10^{-6}$)] which is equal to 0.70 to 1.00. The ratio (a)/[(a)+(b)] of less than 0.70 undesirably reduces the flexural strength, the flexural strain and the impact strength of a molded product, increases the post-reflow warpage and deteriorates the tribological property and the flexural fatigue characteristic. In terms of further enhancing the flexural fatigue characteristic, the ratio (a)/[(a)+(b)] is more preferably not less than 0.82 and is especially preferably not less than 0.90.

The amounts of the terminal groups of the liquid crystalline polyester resin are calculated by the following procedure. The procedure weighs the liquid crystalline polyester resin in an NMR sample tube and dissolves the weighed liquid crystalline polyester resin a liquid crystalline polyester resin-soluble solvent (for example, pentafluorophenol/ 1,1,2,2-tetrachloroethane-$d_2$ mixed solvent). The procedure performs $^1$H-NMR spectroscopy for terminal acetyl group and $^{13}$C-NMR spectroscopy for terminal hydroxyl group and terminal carboxyl group and calculates the amounts of the terminal groups of the liquid crystalline polyester resin from area ratios of the peaks corresponding to the respective terminal groups to the peak corresponding to the polymer main chain backbone.

The liquid crystalline polyester resin according to the embodiment of the invention preferably has a ratio [(a)+(b)] / (c) of sum of the amount of terminal hydroxyl group (a) [unit: equivalent/ ($g \cdot 10^{-6}$)] and the amount of terminal acetyl group (b) [unit: equivalent/ ($g \cdot 10^{-6}$)] to amount of terminal carboxyl group (c) [unit: equivalent/ ($g \cdot 10^{-6}$)] which is equal to

1.10 to 2.00. The ratio [(a)+(b)]/ (c) of not less than 1.10 further improves the flexural strength and the impact strength of a molded product and further reduces the post-reflow warpage. The ratio [(a)+(b)]/ (c) is more preferably not less than 1.30 and is furthermore preferably not less than 1.40. The ratio [(a)+(b)]/ (c) of not greater than 2.00 further improves the flexural strength and the impact strength of a molded product and further reduces the post-reflow warpage. The ratio [(a)+(b)]/ (c) is more preferably not greater than 1.80.

The liquid crystalline polyester resin according to the embodiment of the invention is preferably comprised of the following structural units (I), (II), (II) (IV) and (V). The ratio of the structural unit (I) to the sum of the structural units (I), (II) and (III) is preferably 68 to 80 mol%. The ratio of the structural unit (II) to the sum of the structural units (II) and (III) is preferably 55 to 75 mol%. The ratio of the structural unit (IV) to the sum of the structural units (IV) and (V) is preferably 60 to 85 mol%. It is preferable that the sum of the structural units (II) and (III) is substantially equimolar with the sum of the structural units (IV) and (V). Using the liquid crystalline polyester resin comprised of the above structural units further improves the toughness of a molded product and further reduces the post-reflow warpage.

[Chem. 2]

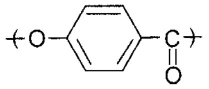
(I)

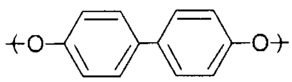
(II)

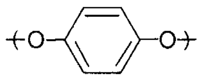
(III)

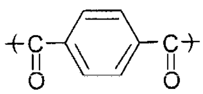
(IV)

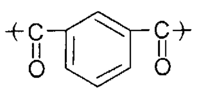
(V)

The above structural unit (I) denotes a structural unit derived from p-hydroxybenzoic acid. The structural unit (II) denotes a structural unit derived from 4,4'-dihydroxybiphenyl. The structural unit (III) denotes a structural unit derived from hydroquinone. The structural unit (IV) denotes a structural unit derived from terephthalic acid. The structural unit (V) denotes a structural unit derived from isophthalic acid.

The ratio of the structural unit (I) to the sum of the structural units (I), (II) and (III) is preferably 68 to 80 mol%. The ratio of the structural unit (I) to the sum of the structural units (I), (II) and (III) is more preferably not less than 70 mol% and is especially preferably not less than 73 mol%. The ratio of the structural unit (I) to the sum of the structural units (I), (II) and (III) is, on the other hand, more preferably not greater than 78 mol%.

The ratio of the structural unit (II) to the sum of the structural units (II) and (III) is preferably 55 to 75 mol%. The ratio of the structural unit (II) to the sum of the structural units (II) and (III) is more preferably not less than 58 mol%. The ratio of the structural unit (II) to the sum of the structural units (II) and (III) is, on the other hand, more preferably not greater than 70 mol% and is especially preferably not greater than 65 mol%.

The ratio of the structural unit (IV) to the sum of the structural units (IV) and (V) is preferably 60 to 85 mol%. The ratio of the structural unit (IV) to the sum of the structural units (IV) and (V) is more preferably not less than 65 mol% and is especially preferably not less than 70 mol%. The ratio of the structural unit (IV) to the sum of the structural units (IV) and (V) is, on the other hand, preferably not greater than 80 mol%.

It is also preferable that the sum of the structural units (II) and (III) is substantially equimolar with the sum of the structural units (IV) and (V). The term "substantially equimolar" herein means that the structural units forming the polymer main chain except the terminal groups are equimolar. Even the non-equimolar composition when including the structural units of the terminal groups may accordingly satisfy the "substantially equimolar" condition.

According to the embodiment of the invention, the contents of the respective structural units are calculated by

the procedure that weighs the liquid crystalline polyester resin in an NMR (nuclear magnetic resonance) test tube, dissolves the weighed liquid crystalline polyester resin in a liquid crystalline polyester resin-soluble solvent (for example, pentafluorophenol/ tetrachloroethane-$d_2$ mixed solvent), measures the solution by $^1$H-NMR spectroscopy and calculates the contents of the respective structural units from an area ratio of the peaks corresponding to the respective structural units.

The liquid crystalline polyester resin according to the embodiment of the invention preferably has ΔS (entropy of melting) defined by the following Equation [1] of 1.0 to $3.0\times10^{-3}$ J/g·K. Such liquid crystalline polyester resin has the favorably-controlled crystalline state and preferably achieves a good balance of low warpage, high strength and high toughness which are the advantageous effects of the invention.

$$\Delta S\ (J/g\cdot K) = \Delta Hm(J/g) / Tm(K) \qquad [1]$$

Here Tm (melting point) denotes an endothermic peak temperature (Tm3) described below. The measurement method in differential scanning calorimetry observes an endothermic peak temperature (Tm1) during measurement of the liquid crystalline polyester resin under the temperature rise condition of 20°C/ minute from room temperature. The measurement method subsequently observes an endothermic peak temperature (Tm2) during measurement with keeping the temperature at Tm1+20°C for five minutes, decreasing the temperature to room temperature under the temperature decrease condition of 20°C/ minute and again increasing the temperature under the temperature rise condition of 20°C/ minute. The measurement method subsequently observes the endothermic peak temperature (Tm3) during measurement with keeping the temperature at Tm1+20°C for five minutes, decreasing the temperature to room temperature under the temperature decrease condition of 20°C/ minute and again increasing the temperature under the temperature rise condition of 20°C/ minute. ΔHm denotes an endothermic peak area (ΔHm3) of Tm3.

Tm2 and Tm3 are generally equivalent to each other, and their endothermic peak areas (ΔHm2 and ΔHm3) are also equivalent to each other. Post-melting stretch during processing to fiber or film after polymerization of the polymer, however, may cause them to be not equivalent to each other. The above post-melting stretch strongly orients the polymer molecules and does not sufficiently relieve the orientation even during the second temperature rise time in differential scanning calorimetry. This may prevent Tm2 and ΔHm2 from having the proper polymer characteristics and may change Tm2 and Tm3 as well as ΔHm2 and ΔHm3. In order to determine the accurate ΔS (entropy of melting) of the polymer, the calculation needs to use Tm3 and ΔHm3 free from extrinsic influence.

ΔS (entropy of melting) is more preferably not less than $1.2\times10^{-3}$ J/g·K and is especially preferably not less than $1.5\times10^{-3}$ J/g·K. ΔS (entropy of melting) is also more preferably not greater than $2.6\times10^{-3}$ J/g·K and is especially preferably not greater than $2.2\times10^{-3}$ J/g·K. ΔS (entropy of melting) in this range preferably ensures good flowability and achieves a good balance of the reinforcement effects including low warpage and high strength with the high toughness of the resulting liquid crystalline polyester resin composition.

ΔS (entropy of melting) in the above range well controls the crystallinity of the liquid crystalline polyester resin and accordingly enables a molded product with substantially no strain in the molecules to be molded from the liquid crystalline polyester resin composition according to the embodiment of the invention. As a result, this produces a molded product having reduced post-reflow warpage, high strength and high toughness.

In measurement of ΔHm (melting heat quantity) and melting point (Tm), ΔS is not calculable when no endothermic peak is obtained. The liquid crystalline polyester resin with no such peak observation undesirably has low heat resistance.

With regard to the melting point (Tm) of the liquid crystalline polyester resin according to the embodiment of the invention, in terms of achieving a balance of workability with heat resistance, the upper limit of the melting point (Tm) is preferably not higher than 350°C, is more preferably not higher than 345°C and is furthermore preferably not higher than 340°C. The lower limit of the melting point (Tm) is, on the other hand, preferably not lower than 220°C, is more preferably not lower than 270°C and is furthermore preferably not lower than 300°C.

The upper limit of the number-average molecular weight of the liquid crystalline polyester resin according to the embodiment of the invention is preferably not greater than 50,000, is more preferably not greater than 30,000 and is furthermore preferably not greater than 20,000. The lower limit of the number-average molecular weight is, on the other hand, preferably not less than 3,000 and is more preferably not less than 8,000.

The liquid crystalline polyester resin according to the embodiment of the invention preferably has the degree of dispersion of not greater than 2.5, where the degree of dispersion is a value obtained by dividing the weight-average molecular weight by the number-average molecular weight. The degree of dispersion of not greater than 2.5 gives a sharp molecular weight distribution, thus ensuring the good meltability and good crystallinity and further improving the strength of a molded product produced by molding the liquid crystalline polyester resin composition according to the embodiment of the invention. Improvement of the strength caused by controlling the degree of dispersion to be not greater than 2.5 may be attributed to that the high degree of crystallization increases the surface hardness of the molded

product. The degree of dispersion is preferably not greater than 2.2 and is more preferably not greater than 2.0.

The weight-average molecular weight and the number-average molecular weight are measurable by GPC/LS (gel permeation chromatography/ light scattering) using a liquid crystalline polyester resin-soluble solvent as an eluent. Available examples of the liquid crystalline polyester resin-soluble solvent include halogenated phenols and mixed solvents of halogenated phenols and general organic solvents. Preferable are pentafluorophenol and a mixed solvent of pentafluorophenol and chloroform. In terms of the handling property, especially preferable is the mixed solvent of pentafluorophenol and chloroform.

The upper limit of the melt viscosity of the liquid crystalline polyester resin according to the embodiment of the invention is preferably not higher than 200 Pa·s, is more preferably not higher than 100 Pa·s and is furthermore preferably not higher than 50 Pa·s. The lower limit of the melt viscosity is, on the other hand, preferably not lower than 1 Pa·s, is more preferably not lower than 10 Pa·s and is furthermore preferably not lower than 20 Pa·s. The melt viscosity is a measurement value using Koka-type flow tester under the conditions of the melting point of the liquid crystalline polyester resin +10°C and the shear rate of 1,000/ sec.

The liquid crystalline polyester resin according to the embodiment of the invention is obtainable by the known deacetylation polymerization of polyester. One applicable procedure of deacetylation polymerization acetylates a specified amount of phenolic hydroxyl group of an aromatic hydroxycarboxylic acid and an aromatic diol with acetic anhydride and subsequently performs deacetylation polymerization. According to the embodiment of the invention, a preferable example of the aromatic hydroxycarboxylic acid is p-hydroxybenzoic acid, and preferable examples of the aromatic diol are 4,4'-dihydroxybiphenyl and hydroquinone.

The acetylation process mixes, for example, specified amounts of p-hydroxybenzoic acid, 4,4'-dihydroxybiphenyl, hydroquinone, terephthalic acid, isophthalic acid and acetic anhydride in a reaction vessel and heats the mixture with stirring under a nitrogen gas atmosphere to acetylate the hydroxyl group. The above reaction vessel may be equipped with stirring blades, may be equipped with a distillation pipe and may be equipped with an outlet in its lower portion. The conditions of acetylation are generally the temperature of 130 to 150°C for 1 to 3 hours.

The amount of acetic anhydride used is preferably not greater than 1.15 molar equivalent and is more preferably not greater than 1.12 molar equivalent of the total of the phenolic hydroxyl group of p-hydroxybenzoic acid, 4,4'-dihydroxybiphenyl and hydroquinone. The amount of acetic anhydride used is, on the other hand, preferably not less than 1.00 molar equivalent, is more preferably not less than 1.05 molar equivalent and is furthermore preferably not less than 1.07 molar equivalent of the total of the phenolic hydroxyl group. Controlling the amount of acetic anhydride used to the above range enables the rate of acetylation of hydroquinone having the low acetylation reaction rate to be readily controlled and produces the excellent liquid crystalline polyester resin having less gas emission and its resin composition.

A preferable method of deacetylation polymerization is a melt polymerization method that causes a reaction to proceed at a liquid crystalline polyester resin-melting temperature under reduced pressure to complete the polymerization reaction. More specifically, in order to make the reaction proceed with removal of acetic acid after acetylation, a preferable melt polymerization method heats the liquid crystalline polyester resin to or above the melting temperature of the liquid crystalline polyester resin and performs deacetylation polymerization under reduced pressure. The melt polymerization method is the advantageous method for production of a homogeneous polymer and preferably produces the excellent liquid crystalline polyester resin having less gas emission and its resin composition.

The temperature of deacetylation polymerization is in the range of general melting temperature of the liquid crystalline polyester resin, for example, in the range of 250 to 365°C and is preferably the temperature of not lower than the melting point of the liquid crystalline polyester resin +10°C. The pressure reduction degree during polymerization is generally 0.1 mmHg (13.3 Pa) to 20 mmHg (2660 Pa), is preferably not higher than 10 mmHg (1330 Pa) and is more preferably not higher than 5 mmHg (665 Pa). Acetylation and polymerization may be performed successively in one identical reaction vessel or may be performed in different reaction vessels.

According to the embodiment of the invention, in order to readily control ΔS (entropy of melting) of the liquid crystalline polyester resin to the above desired range, it is especially preferable to raise the polymerization vessel jacket temperature during deacetylation polymerization to have an average temperature rise rate of 1.0 to 1.6°C/ minute from 270°C to the maximum polymerization temperature. Setting the average temperature rise rate of 1.0 to 1.6°C/ minute from 270°C to the maximum polymerization temperature enables the monomer reactivity to be adequately controlled during deacetylation polymerization and thereby easily produces the liquid crystalline polyester resin having the ratio of (a)/[(a)+(b)] of 0.70 to 1.00. This also controls the oligomerization reaction of the acetylated monomer and thereby controls the molecular weight distribution of the polymer and the reactivity of p-hydroxybenzoic acid that is likely to be blocked, thus easily producing the liquid crystalline polyester resin having ΔS (entropy of melting) of 1.0 to $3.0\times10^{-3}$ J/g·K.

More specifically, setting the average temperature rise rate of not lower than 1.0°C/ minute from 270°C to the maximum polymerization temperature causes polymerization to proceed quickly to adequately block p-hydroxybenzoic and suppresses the change in composition of the liquid crystalline polymer caused by an increase in melt residence time. Suppression of the composition deviation enables the ratio (a)/[(a)+(b)] of the terminal groups to be controlled to 0.70 to 1.00 and readily produces the liquid crystalline polyester resin having ΔS (entropy of melting) of not less than

$1.0\times10^{-3}$ J/g·K. The average temperature rise rate is preferably not lower than 1.2°C/ minute and is more preferably not lower than 1.4°C/ minute.

Setting the average temperature rise rate of not higher than 1.6°C/ minute from 270°C to the maximum polymerization temperature, on the other hand, suppresses the composition deviation caused by sublimation during monomer polymerization and enables the ratio (a)/[(a)+(b)] of the terminal groups to be controlled to 0.70 to 1.00. This also adequately suppresses the reactivity of p-hydroxybenzoic acid to adequately control the degree of blocking and thus readily produces the liquid crystalline polyester resin having $\Delta$S (entropy of melting) of not greater than $3.0\times10^{-3}$ J/g·K. This additionally causes the internal temperature to be likely to follow an increase in polymerization vessel jacket temperature and enhances the productivity. Since the oligomerization reaction of acetylated monomer starts proceeding at the temperature of about 270°C, the average temperature rise rate from 270°C of the polymerization vessel jacket temperature to the maximum polymerization temperature is noted as the average temperature rise rate of the polymerization vessel jacket temperature.

The method of taking out the resulting polymer from the reaction vessel after completion of polymerization is, for example, a method of pressurizing the inside of the reaction vessel at the melting temperature of the polymer to discharge the polymer through an outlet provided in the reaction vessel and cooling down the discharged polymer in cooling fluid. The inside of the above reaction vessel may be pressurized to, for example, 0.02 to 0.5 MPa. The above outlet may be provided in a lower portion of the reaction vessel. The polymer may be discharged from the outlet in the form of strands. Resin pellets can be obtained by cutting the polymer cooled down in the cooling fluid into pellets.

In production of the liquid crystalline polyester resin according to the embodiment of the invention, the polymerization reaction may be completed by a solid-phase polymerization method. For example, one applicable method may crush a polymer or oligomer of the liquid crystalline polyester resin according to the embodiment of the invention with a crusher and heat the crushed polymer or oligomer under nitrogen stream or under reduced pressure to polymerize the polymer or oligomer to a desired degree of polymerization and complete the reaction. The above heating may be in the range of the (melting point of the liquid crystalline polyester resin -5°C) to the (melting point - 50°C) (for example, 200 to 300°C) for 1 to 50 hours.

The polymerization reaction of the liquid crystalline polyester resin can proceed without a catalyst. A metal compound, such as tin (II) acetate, tetrabutyl titanate, potassium acetate, sodium acetate, antimony trioxide, or metal magnesium may, however, be used as the catalyst.

The liquid crystalline polyester resin composition according to the embodiment of the invention contains 10 to 100 parts by weight of mica relative to 100 parts by weight of the liquid crystalline polyester resin. The mica content of less than 10 parts by weight undesirably causes a significant increase in warpage of a resulting molded product produced by molding the liquid crystalline polyester resin composition. The mica content is preferably not less than 25 parts by weight and is more preferably not less than 40 parts by weight. The mica content of greater than 100 parts by weight, on the other hand, increases the aggregates of mica and thereby reduces the toughness such as impact strength and flexural strain at break. Additionally, the mica content of greater than 100 parts by weight deteriorates the flowability during melt molding process. The mica content is preferably not greater than 85 parts by weight and is more preferably not greater than 75 parts by weight.

The volume-average particle size of the mica included in the liquid crystalline polyester resin composition according to the embodiment of the invention is 10 to 50 $\mu$m. The volume-average particle size of less than 10 $\mu$m undesirably reduces the reinforcement effect of mica. The volume-average particle size of greater than 50 $\mu$m, on the other hand, undesirably reduces the toughness of the liquid crystalline polyester resin composition and deteriorates the flowability during melt molding process. In terms of ensuring the high reinforcement effects and low warpage, the volume-average particle size of mica is more preferably not less than 15 $\mu$m and is especially preferably not less than 20 $\mu$m. In terms of ensuring the excellent toughness and the good flowability that are characteristic of the invention, the volume-average particle size of mica is more preferably not greater than 48 $\mu$m and is especially preferably not greater than 45 $\mu$m.

The following method may be employed to determine the volume-average particle size of the mica included in the liquid crystalline polyester resin composition. The procedure heats 50 g of the liquid crystalline polyester resin composition at 550°C for 3 hours to remove the resin component and isolate mica. When a filler but mica is further contained in the resin composition, the mica may be isolated from the filler by utilizing the difference in specific gravity. For example, when glass fiber is contained in the resin composition, the procedure obtains a mixture of mica and glass fiber, disperses the mixture in a mixed solution of 88 vol% of 1,1,2,2-tetrabromoethane (specific gravity of 2.970) and 12 vol% of ethanol (specific gravity of 0.789), makes the dispersion subject to centrifugal separation at the rotation speed of 10000 rpm for 5 minutes, removes the floating glass fiber by decantation and obtains the precipitating mica by filtration. The procedure weighs 100 mg of the obtained mica, disperses the mica in water and measures the volume-average particle size of mica using a laser diffraction/ scattering particle size distribution analyzer (LA-300 manufactured by HORIBA, Ltd.)

The ratio of the volume-average particle size of the mica included in the liquid crystalline polyester resin composition according to the embodiment of the invention to the median size measured by cumulative particle size distribution

is preferably not less than 1.05, is more preferably not less than 1.10 and is especially preferably not less than 1.15. The ratio of the volume-average particle size of mica to the median size measured by cumulative particle size distribution is, on the other hand, preferably not greater than 1.30. Controlling the ratio of the volume-average particle size of mica to the median size measured by cumulative particle size distribution to the above range further improves the tribological property and the flexural fatigue characteristic of the molded product.

The ratio of the volume-average particle size to the median size is an index indicating a variation in particle size of the mica included in the liquid crystalline polyester resin composition. Mica included in the general resin composition has the ratio of the volume-average particle size to the median size of about 1.00. The mica having the ratio of the volume-average particle size to the median size in the above range may be obtained, for example, by a method of using two or more micas having different volume-average particles sizes in combination or by a method of excluding mica having the particle size of a specific range by sieving.

The median size of the mica included in the liquid crystalline polyester resin composition according to the embodiment of the invention is determined as the particle size that gives the cumulative solid particle mass of 50% to the whole solid particle mass in the particle size distribution obtained by dispersing mica isolated from the resin composition in water and measuring the dispersion using the laser diffraction/ scattering particle size distribution analyzer (LA-300 manufactured by HORIBA, Ltd.)

The aspect ratio of the mica included in the liquid crystalline polyester resin composition according to the embodiment of the invention is 50 to 100. The "aspect ratio" of mica herein is a value calculated as volume-average particle size (μm)/ number-average thickness (μm). The aspect ratio of less than 50 undesirably deteriorates the reinforcement effects of mica. The aspect ratio of greater than 100, on the other hand, undesirably reduces the toughness of the liquid crystalline polyester resin composition. In terms of ensuring the high reinforcement effects and the low warpage, the aspect ratio of mica is more preferably not less than 65 and is especially preferably not less than 75. In terms of ensuring the high toughness that is characteristic of the invention, on the other hand, the aspect ratio of mica is more preferably not greater than 95.

The aspect ratio of mica is obtained by determining the volume-average particle size and the number-average thickness of mica and calculating the volume-average particle size (μm) / number-average thickness (μm) as described above. The "number-average thickness" is determined by the following procedure. The procedure heats 50 g of the liquid crystalline polyester resin composition at 550°C for 3 hours to remove the resin component and isolate mica and observes the mica at 2000-fold magnification with a scanning electron microscope (SEM) ("JSM-6360LV" manufactured by JEOL Ltd.) The thicknesses of ten mica particles selected randomly from the SEM image are measured with adjustment of the observation direction and the observation angle, and their number-average value is calculated as the number-average thickness. When a filler but mica is contained in the resin composition, the mica is isolated from the filler by utilizing the difference in specific gravity. For example, when glass fiber is contained in the resin composition, the procedure obtains a mixture of mica and glass fiber, disperses the mixture in a mixed solution of 88 vol% of 1,1,2,2-tetrabromoethane (specific gravity of 2.970) and 12 vol% of ethanol (specific gravity of 0.789), makes the dispersion subject to centrifugal separation at the rotation speed of 10000 rpm for 5 minutes, removes the floating glass fiber by decantation and obtains the precipitating mica.

The number-average thickness of the mica included in the liquid crystalline polyester resin composition according to the embodiment of the invention is preferably not less than 0.15 μm, which further reduces the warpage of a resulting molded product obtained by molding the liquid crystalline polyester resin composition. The number-average thickness of mica is more preferably not less than 0.25 μm. The number-average thickness of mica is also preferably not greater than 0.90 μm, which improves the flowability of the liquid crystalline polyester resin composition and further reduces the warpage of a molded product. The number-average thickness of mica is more preferably not greater than 0.70 μm.

In the liquid crystalline polyester resin composition according to the embodiment of the invention, in order to control the volume-average particle size and the shape of the mica (B) included in the composition to the desired ranges described above, the volume-average particle size of mica before mixing is preferably not greater than 70 μm, is more preferably not greater than 50 μm and is furthermore preferably not greater than 30 μm. In terms of reducing the aggregates and improves the dielectric breakdown strength of the molded product, on the other hand, the volume-average particle size of mica before mixing is preferably not less than 10 μm, is more preferably not less than 15 μm and is furthermore preferable not less than 20 μm.

The mica may be naturally-produced muscovite, biotite or phlogopite or may be artificially-produced synthetic mica. The mica may include any of two or more of these.

The production method of mica may be, for example, water-jet grinding, wet grinding such as wet crushing with a grindstone, or dry grinding such as dry ball mill grinding, pressure roller mill grinding, air jet mill grinding or dry grinding with an impact grinder like an atomizer.

According to the embodiment of the invention, in order to improve the wetting property of mica relative to the polyester resin, the surface of mica may be treated with, for example, a silane coupling agent. The mica used may be

mica subject to heat treatment for the purpose of removing impurities and hardening mica.

The liquid crystalline polyester resin composition according to the embodiment of the invention may further contain: a fibrous filler such as glass fiber, milled glass fiber, carbon fiber, aromatic polyamide fiber, potassium titanate fiber, gypsum fiber, brass fiber, stainless steel fiber, steel fiber, ceramic fiber, boron whisker fiber or asbestos fiber; or powdery, granular or plate-like inorganic filler such as talc, graphite, calcium carbonate, glass beads, glass microballoons, clay, wollastonite, titanium oxide and molybdenum disulfide. The resin composition may contain two or more of these fillers. In terms of improving the rigidity of the resulting molded product, it is preferable to contain the fibrous filler such as glass fiber, milled glass fiber, carbon fiber, aromatic polyamide fiber, potassium titanate fiber, gypsum fiber, brass fiber, stainless steel fiber, steel fiber, ceramic fiber, boron whisker fiber or asbestos fiber in the liquid crystalline polyester resin composition. It is especially preferable to contain glass fiber, milled glass fiber or PAN-series carbon fiber.

The number-average fiber length of the fibrous filler included in the liquid crystalline polyester resin composition according to the embodiment of the invention is preferably not less than 30 $\mu$m, which reduces anisotropy of a resulting molded product obtained from the liquid crystalline polyester resin composition. The number-average fiber length of the fibrous filler is preferably not less than 100 $\mu$m and is more preferably not less than 200 $\mu$m. In terms of the flowability of the liquid crystalline polyester resin composition, on the other hand, the number-average fiber length of the fibrous filler is preferably not greater than 500 $\mu$m, is more preferably not greater than 450 $\mu$m and is furthermore preferably not greater than 400 $\mu$m.

The insufficient degree of dispersion of the fibrous filler reduces the effect of reducing anisotropy. In order to enhance the degree of dispersion of the fibrous filler, the effective method may increase the screw rotation speed during melt kneading of the fibrous filler with the resin or may decrease the cylinder temperature to increase the melt viscosity of the molten resin and thereby increase the shear force. In order to improve the compatibility of the fibrous filler with the resin, it is also effective to coat the fibrous filler with a coupling agent.

The number-average fiber length of the fibrous filler included in the liquid crystalline polyester resin composition may be determined by the following procedure that utilizes the difference in specific gravity between the fibrous filler and the mica. For example, when the fibrous filler is glass fiber, the procedure heats the resin composition at 550°C for 3 hours to remove the resin component and obtains a mixture of mica and glass fiber included in the liquid crystalline polyester resin composition. The procedure subsequently disperses this mixture in a mixed solution of 88 vol% of 1,1,2,2-tetrabromoethane (specific gravity of 2.970) and 12 vol% of ethanol (specific gravity of 0.789), makes the dispersion subject to centrifugal separation at the rotation speed of 10000 rpm for 5 minutes and separates the floating glass fibers by decantation. The procedure then separates the glass fibers from the solvent by filtration. The procedure scatters the glass fibers on a glass slide for microscope in such a manner that the respective fibers are not stacked on one another and takes a micrograph at 800-fold magnification. The procedure measures the fiber length of 500 or more of the glass fibers randomly selected from the micrograph and calculates their number-average value. When the fibrous filler is a fibrous inorganic filler other than glass fiber, the fibrous inorganic filler can be similarly isolated from mica by utilizing the difference in specific gravity.

The content of the fibrous filler is preferably 10 to 100 parts by weight relative to 100 parts by weight of the liquid crystalline polyester resin. The content of the fibrous inorganic filler of not less than 10 parts by weight preferably reduces the anisotropy of a molded product. The content of the fibrous inorganic filler is preferably not less than 20 parts by weight and is more preferably not less than 30 parts by weight. The content of the fibrous inorganic filler of not greater than 100 parts by weight enables the flowability of the liquid crystalline polyester resin to be kept at a higher level. The content of the fibrous inorganic filler is more preferably not greater than 75 parts by weight and is furthermore preferably not greater than 50 parts by weight.

It is preferable that the liquid crystalline polyester resin composition according to the embodiment of the invention further contains a talc (D), since the talc remarkably improves the flowability. The content of the talc (D) is preferably not less than 5 parts by weight and is more preferably not less than 10 parts by weight relative to 100 parts by weight of the liquid crystalline polyester resin (A). The content of the talc (D) is also preferably not greater than 70 parts by weight and is more preferably not greater than 45 parts by weight. The content of talc of not less than 5 parts by weight preferably ensures the good flowability. The content of talc of not greater than 70 parts by weight, on the other hand, preferably ensures the low warpage and the high toughness such as flexural strain at break and impact strength. The liquid crystalline polyester resin composition obtained by mixing the mica (B) having the specified particle size and the specified aspect ratio and the talc (D) with the liquid crystalline polyester resin (A) having the specified terminal structure that is characteristic of the embodiment of the invention relieves the physical interference between the fillers during flow by the synergetic effect of using the two fillers having different particle sizes and different shapes in combination. This specifically improves the flowability of the liquid crystalline polyester resin composition. The liquid crystalline polyester resin composition obtained by mixing the mica (B) having the specified particle size and the specified aspect ratio and the talc (D) with the liquid crystalline polyester resin (A) having the specified terminal structure preferably has the excellent smoothness on the surface of a molded product obtained by molding process and thus remarkably improves the resistance to tracking breakdown.

The following procedure may be employed to determine the number-average particle size of the talc included in the liquid crystalline polyester resin composition according to the embodiment of the invention. The procedure heats 50 g of the liquid crystalline polyester resin composition at 550°C for 3 hours to remove the resin component. The procedure subsequently weighs 100 mg of talc isolated from mica by utilizing the difference in specific gravity, disperses the weighed talc in water, measures the particle size of the talc using the laser diffraction/ scattering particle size distribution analyzer (LA-300 manufactured by HORIBA, Ltd.) and calculates the number average value to determine the number-average particle size of the talc. It is especially preferable to use the talc having the number-average particle size of not greater than 10 μm, which has specifically high tracking resistance.

The oil absorption of the talc included in the liquid crystalline polyester resin composition according to the embodiment of the invention is preferably not less than 20 ml/ 100 g and is more preferably not less than 35 ml/ 100 g. The oil absorption of the talc is also preferably not greater than 70 ml/ 100 g and is more preferably not greater than 60 ml/ 100 g. Using the talc having the oil absorption in this range preferably produces the liquid crystalline polyester resin composition having the good flowability. For example, the measurement procedure may measure the oil absorption of the talc in conformity with JIS K-5101 (established on February 20, 2004), after heating the liquid crystalline polyester resin composition to remove the resin component and obtain the talc.

The talc may be produced, for example, by crushing with a micron mill, a Loesche mill or a jet mill. For the purpose of improving the affinity of the talc for the liquid crystalline polyester resin in the liquid crystalline polyester resin composition, the surface of the talc may be treated with a silane coupling agent. The talc used may be talc subject to heat treatment for the purpose of removing impurities and hardening talc. For the purpose of improving the handling ability, the talc used may be compressed talc.

The liquid crystalline polyester resin composition according to the embodiment of the invention may additionally contain a conventional additive or another thermoplastic resin in a range that does not interfere with the object of the invention to additionally provide specified properties: for example, antioxidants and heat stabilizers (e.g., hindered phenol, hydroquinone, phosphites and their substituted compounds), ultraviolet absorbers (e.g., resorcinol, salicylate, benzotriazole and benzophenone), lubricants and mold release agents (e.g., montanic acid and its salts, its esters and its half esters, stearyl alcohol, stearamide and polyethylene wax), coloring agents including dyes (e.g., nitrosine) and pigments (e.g., cadmium sulfide, phthalocyanine and carbon black); plasticizers; and antistatic agents.

The liquid crystalline polyester resin composition according to the embodiment of the invention may be obtained, for example, by melt kneading the liquid crystalline polyester resin (A), the fillers such as the mica (B) and the talc (D) described above and other components as appropriate. The method of melt kneading may be, for example, a method of melt kneading the mixture at the temperature of 200 to 350°C using a Banbury mixer, a rubber roller, a kneader, a single-screw extruder or a twin-screw extruder. In order to knead mica homogeneously with high dispersibility, using an extruder is preferable; using a twin-screw extruder is more preferable; and using a twin-screw extruder with a side feeder is furthermore preferable. The method of melt kneading may be (i) method of locating a side feeder on the upstream side from the center along the entire length from a main feeder on the extruder driving side to a nozzles on the resin discharge part and feeding mica from the side feeder; and (ii) method of pre-mixing part of mica to be fed with the liquid crystalline polyester rein and feeding the pre-mixture from a main feeder on the extruder driving side while feeding the remaining part of mica from a side feeder.

The mica changes its shape by crushing during melt kneading. It is accordingly preferable to set the screw rotation speed to 100 to 800 rpm, in order to suppress such crushing. It is preferable that the screw rotation speed is adequately regulated according to the shape of mica before mixing. Specifically, in the case of melt kneading with a screw arrangement including at least one kneading disk, it is preferable to set the kneading temperature and the screw rotation speed as the melt kneading conditions, such that the melt viscosity of the liquid crystalline polyester resin composition is 30 Pa·s to 200 Pa·s at a maximum shear rate (γ) of a kneading disk unit in an extruder. Melt kneading under these conditions enables the volume-average particle size of mica, the aspect ratio of mica and the ratio of the volume-average particle size to the median size of mica to be readily adjusted to the desired ranges. The maximum shear rate (γ) of the kneading disk unit in the extruder is calculated from the temperature during melt kneading and the screw rotation speed during kneading according to Equation [2] given below:

$$\gamma = \pi \times D \times N / (60 \times c) \qquad [2]$$

(where D represents a screw diameter (mm), N represents a screw rotation speed (rpm) and c represents a clearance (mm) of the narrowest part of the kneading disk unit).

For example, the kneading temperature and the screw rotation speed may be set to the favorable conditions for controlling the shape of mica by measuring the melt viscosity of the liquid crystalline polyester resin composition using Koka-type flow tester CFT-500D ( orifice 0.5 ϕ × 10 mm) (manufactured by SHIMADZU CORPORATION) and

adequately searching for the temperature and the shear rate to meet the above range.

The liquid crystalline polyester resin and the liquid crystalline polyester resin composition according to the embodiment of the invention is processible to a molded product having the excellent surface appearance (tone), good mechanical properties, the high heat resistance and the high flame retardancy by a conventional molding technique such as injection molding, extrusion molding or press molding.

The molded product herein is, for example, an injection molded product, an extrusion molded product, a press molded product, a sheet, a pipe, a film or a fiber. Especially preferable is injection molding, which provides the significant advantageous effects of the invention.

The molded product obtained as described above may be employed for: for example, electric and electronic components, such as various gears, various casings, sensors, LED lamps, connectors, sockets, resistors, relay cases, relay bases, relay spools, switches, coil bobbins, capacitors, variable capacitor cases, optical pickups, oscillators, various terminal strips and boards, transformers, plugs, printed circuit boards, tuners, speakers, microphones, headphones, small motors, magnetic head bases, power modules, housings, semiconductors, liquid crystal display components, FDD carriages, FDD chassis, HDD components, motor brush holders, parabola antennas and computer components; domestic and office electric appliance components, such as video tape recorder components, TV set components, irons, hair dryers, rice cooker components, microwave oven components, acoustic components, audio equipment components for audios, laserdiscs (registered trademark) and compact disks, lighting components, refrigerator components, air conditioner components, typewriter components and word processor components, office computer components, telephone components, facsimile components, copy machine components; machine components, such as cleaning jigs, various bearings including oilless bearings, stern bearings and submerged bearings, motor components, for lighters and typewriters; optical equipment and precision machine components, such as microscopes, binoculars, cameras and watches; and automobile and vehicle components, such as alternator terminals, alternator connectors, IC regulators, potentiometer bases for light dimmers, various valves including emission valves, various pipes for fuel, exhaust system, and air intake system, air intake nozzle snorkels, intake manifolds, fuel pumps, engine coolant joints, carburetor main bodies, carburetor spacers, emission sensors, coolant sensors, oil temperature sensors, throttle position sensors, crankshaft position sensors, air flowmeters, brake pad wear sensors, thermostat bases for air conditioners, motor insulators for air conditioners, in-vehicle motor insulators for, e.g., power windows, hot air flow control valves, brush holders for radiator motors, water pump impellers, turbine vanes, wiper motor components, distributors, starter switches, starter relays, transmission wire harnesses, windshield washer fluid nozzles, air conditioner panel switch plates, fuel solenoid valve coils, fuse connectors, horn terminals, electric component insulators, step motor rotors, lamp bezels, lamp sockets, lamp reflectors, lamp housings, brake pistons, solenoid bobbins, engine oil filters and ignition cases.

The molded product according to the embodiment of the invention has high toughness to be resistant to press-fitting of a pin and is thus preferably employed for a connector, for example, alternator connector or fuse connector.

## Examples

The following further describes the invention with reference to examples. The features of the invention are, however, not limited to the following examples.

### (A) Liquid Crystalline Polyester Resin

The composition analysis and the property evaluation of the liquid crystalline polyester resin were performed by the following methods:

### (1) Composition Analysis of Liquid Crystalline Polyester Resin

Composition analysis of the liquid crystalline polyester resin was performed by $^1$H-nuclear magnetic resonance spectroscopy ($^1$H-NMR). The procedure weighed 50 mg of the liquid crystalline polyester resin in an NMR sample tube, dissolved the weighed liquid crystalline polyester resin in 800 μl of a solvent (pentafluorophenol/ 1,1,2,2,-tetrachloroethane-$d_2$ = 65/ 35 (weight ratio) mixed solvent), and made the solution subject to $^1$H-NMR spectroscopy under the conditions of the spectral frequency of 500 MHz and the temperature of 80°C with UNITY INOVA 500 NMR spectrometer (manufactured by Varian, Inc). The composition of the liquid crystalline polyester resin was analyzed from the area ratios of the peaks corresponding to the respective structural units observed in the spectral range of about 7 to 9.5 ppm.

### (2) Measurement of Melting Point (Tm) and ΔS (Entropy of Melting) of Liquid Crystalline Polyester Resin

After observation of an endothermic peak temperature (Tm1) during measurement under the temperature rise condition of 20°C/ minute from room temperature with a differential scanning calorimeter DSC-7 (manufactured by

PerkinElmer, Inc.), the procedure kept the temperature at Tm1+20°C for 5 minutes and subsequently decreased the temperature under the temperature decrease condition of 20°C/ minute to room temperature. After observation of an endothermic peak temperature (Tm2) during subsequent measurement under the temperature rise condition of 20°C/ minute, the procedure kept the temperature at Tm1+20°C for 5 minutes and subsequently decreased the temperature under the temperature decrease condition of 20°C/ minute to room temperature. An endothermic peak temperature (Tm3) observed during subsequent measurement under the temperature rise condition of 20°C/ minute was specified as the melting point. ΔS (J/g·K) was then calculated from the melting point and its endothermic peak area (ΔHm3) according to Equation [1] given below. In the following Preparation Examples, the melting point and the entropy of melting are respectively shown as Tm and ΔS.

$$\Delta S\ (J/g\cdot K) = \Delta Hm(J/g)/\ Tm(K) \qquad [1]$$

(3) Measurement of Molecular Weight and Degree of Dispersion of Liquid Crystalline Polyester Resin

The number-average molecular weight and the weight-average molecular weight of the liquid crystalline polyester resin were measured by gel permeation chromatography (GPC)/ LALLS method under the following conditions. The degree of dispersion (Mw/Mn) was calculated by dividing the weight-average molecular weight (Mw) by the number-average molecular weight (Mn).

(GPC)

GPC Apparatus: Manufactured by Waters Corporation
Detector: Differential refractive index detector RI2410 (manufactured by Waters Corporation)
Column: Shodex K-806M (two) and K-802 (one) (manufactured by Showa Denko K.K.)
Eluent: Pentafluorophenol/ chloroform (35/65 w/w%)
Measurement Temperature: 23°C
Flow Rate: 0.8 mL/min
Sample Injection Volume: 200 μL (Concentration: 0.1 w/v%)

(LALLS)

Device: Low-angle laser light scattering photometer KMX-6 (manufactured by Chromatix, Inc.)
Detector Wavelength: 633 nm (He-Ne)
Detector Temperature: 23°C

(4) Measurement of Melt Viscosity of Liquid Crystalline Polyester Resin

The melt viscosity was measured at the temperature of the melting point of the liquid crystalline polyester +10°C at the shear rate of 1000/ second by Koka-type flow tester CFT-500D (orifice: 0.5ϕ × 10 mm) (manufactured by Shimadzu Corporation).

(5) Measurement of Amounts of Terminal Groups of Liquid Crystalline Polyester Resin

With respect to the amounts of the terminal groups of the liquid crystalline polyester resin, terminal hydroxyl group was measured by $^{13}$C-nuclear magnetic resonance spectroscopy ($^{13}$C-NMR). The procedure weighed 50 mg of the liquid crystalline polyester resin in an NMR sample tube, dissolved the weighed liquid crystalline polyester resin in 800 μl of a pentafluorophenol/ 1,1,2,2,-tetrachloroethane-$d_2$ mixed solvent (mixing ratio: 65/35 w/w%), and made the solution subject to $^{13}$C-NMR spectroscopy under the conditions of the spectral frequency of 126 MHz and the temperature of 80°C with UNITY INOVA 500 NMR spectrometer (manufactured by Varian, Inc). The amount of terminal hydroxyl group was analyzed from the ratio of a peak area corresponding to carbon adjacent to the terminal hydroxyl group observed in about 115 to 115.5 ppm to a peak area corresponding to carbon in the polymer main chain backbone. The amount of terminal carboxyl group was analyzed from the ratio of a peak area corresponding to the terminal carboxyl

group observed in about 164 to 165 ppm to the peak area corresponding to carbon in the polymer main chain backbone.

The amount of terminal acetyl group was measured by $^1$H-NMR. The procedure weighed 50 mg of the liquid crystalline polyester resin in an NMR sample tube, dissolved the weighed liquid crystalline polyester resin in 800 μl of a pentafluorophenol/ 1,1,2,2,-tetrachloroethane-$d_2$ mixed solvent (mixing ratio: 65/35 w/w%), and made the solution subject to $^1$H-NMR spectroscopy under the conditions of the spectral frequency of 500 MHz and the temperature of 80°C with UNITY INOVA 500 NMR spectrometer (manufactured by Varian, Inc). The amount of terminal acetyl group was analyzed from the ratio of a peak area corresponding to the terminal acetyl group observed in about 2.5 ppm to the peak area corresponding to the polymer main chain backbone.

[Preparation Example 1]

In a 5L reaction vessel with stirring blades and a distillation pipe, 932 parts by weight of p-hydroxybenzoic acid, 251 parts by weight of 4,4'-dihydroxybiphenyl, 99 parts by weight of hydroquinone, 284 parts by weight of terephthalic acid, 90 parts by weight of isophthalic acid and 1252 parts by weight of acetic anhydride (1.09 equivalents of the total amount of phenolic hydroxyl group) were mixed, were reacted with stirring in nitrogen atmosphere at 145°C for 1 hour, and were then heated by increasing the jacket temperature at an average rate of temperature increase of 0.68°C/minute from 145°C to 270°C and at an average rate of temperature increase of 1.4°C/minute from 270°C to 350°C. The heating time was 4 hours. The reaction further proceeded with keeping the polymerization temperature at 350°C and reducing the pressure to 1.0 mmHg (133 Pa) in 1.0 hour. The polymerization was terminated when the torque required for stirring reached 20 kg.cm. The reaction vessel was then pressurized to the internal pressure of 1.0 kg/cm$^2$ (0.1 MPa), and the polymer was discharged to form strands via nozzles, each having a circular outlet of 10 mm in diameter, and was pelletized with a cutter to give a liquid crystalline polyester resin (a-1).

According to the result of composition analysis of this liquid crystalline polyester resin (a-1), the ratio of the p-hydroxybenzoic acid-derived structural unit (structural unit (I)) to the sum of the p-hydroxybenzoic acid-derived structural unit (structural unit (I)), the 4,4'-dihydroxybiphenyl-derived structural unit (structural unit (II)) and the hydroquinone-derived structural unit (structural unit (III)) was 75 mol%. The ratio of the 4,4'-dihydroxybiphenyl-derived structural unit (structural unit (II)) to the sum of the 4,4'-dihydroxybiphenyl-derived structural unit (structural unit (II)) and the hydroquinone-derived structural unit (structural unit (III)) was 60 mol%. The ratio of the terephthalic acid-derived structural unit (structural unit (IV)) to the sum of the terephthalic acid-derived structural unit (structural unit (IV)) and the isophthalic acid-derived structural unit (structural unit (V)) was 76 mol%. The total amount of the 4,4'-dihydroxybiphenyl-derived structural unit (structural unit (II)) and the hydroquinone-derived structural unit (structural unit (III)) was substantially equimolar with the total amount of the terephthalic acid-derived structural unit (structural unit (IV)) and the isophthalic acid-derived structural unit (structural unit (V)). Tm was 330°C; ΔS was $2.2\times10^{-3}$ J/g·K; the number-average molecular weight was 11,800; the degree of dispersion was 1.8; and the melt viscosity was 28 Pa·s.

As the results of measurement of the amounts of terminal groups by the above method, the amount of terminal hydroxyl group (a) was 175 equivalents/ (g·$10^{-6}$), the amount of terminal acetyl group (b) was 4 equivalents/ (g·$10^{-6}$), and the amount of terminal carboxyl group (c) was 113 equivalents/ (g·$10^{-6}$). The ratio (a)/[(a)+(b)] of the amount of terminal hydroxyl group to the sum of the amount of terminal hydroxyl group and the amount of terminal acetyl group was 0.98.

[Preparation Example 2]

In a 5L reaction vessel with stirring blades and a distillation pipe, 907 parts by weight of p-hydroxybenzoic acid, 294 parts by weight of 4,4'-dihydroxybiphenyl, 94 parts by weight of hydroquinone, 343 parts by weight of terephthalic acid, 61 parts by weight of isophthalic acid and 1272 parts by weight of acetic anhydride (1.09 equivalents of the total amount of phenolic hydroxyl group) were mixed, were reacted with stirring in nitrogen atmosphere at 145°C for 1 hour, and were then heated by increasing the jacket temperature at an average rate of temperature increase of 0.63°C/minute from 145°C to 270°C and at an average rate of temperature increase of 1.6°C/minute from 270°C to 335°C. The heating time was 4 hours. The reaction further proceeded with keeping the polymerization temperature at 335°C and reducing the pressure to 1.0 mmHg (133 Pa) in 1.0 hour. The polymerization was terminated when the torque required for stirring reached 20 kg.cm. The reaction vessel was then pressurized to the internal pressure of 1.0 kg/cm$^2$ (0.1 MPa), and the polymer was discharged to form strands via nozzles, each having a circular outlet of 10 mm in diameter, and was pelletized with a cutter to give a liquid crystalline polyester resin (a-2).

According to the result of composition analysis of this liquid crystalline polyester resin (a-2), the ratio of the structural unit (I) to the sum of the structural unit (I), the structural unit (II) and the structural unit (III) was 73 mol%. The ratio of the structural unit (II) to the sum of the structural unit (II) and the structural unit (III) was 65 mol%. The ratio of the structural unit (IV) to the sum of the structural unit (IV) and the structural unit (V) was 85 mol%. The total amount of the structural unit (II) and the structural unit (III) was substantially equimolar with the total amount of the structural unit

(IV) and the structural unit (V). Tm was 317°C; ΔS was $1.5\times10^{-3}$ J/g·K; the number-average molecular weight was 10,900; the degree of dispersion was 2.0; and the melt viscosity was 23 Pa·s.

As the results of measurement of the amounts of terminal groups by the above method, the amount of terminal hydroxyl group (a) was 160 equivalents/ ($g\cdot10^{-6}$), the amount of terminal acetyl group (b) was 2 equivalents/ ($g\cdot10^{-6}$), and the amount of terminal carboxyl group (c) was 108 equivalents/ ($g\cdot10^{-6}$). The ratio (a)/[(a)+(b)] of the amount of terminal hydroxyl group to the sum of the amount of terminal hydroxyl group and the amount of terminal acetyl group was 0.99.

[Preparation Example 3]

In a 5L reaction vessel with stirring blades and a distillation pipe, 870 parts by weight of p-hydroxybenzoic acid, 292 parts by weight of 4,4'-dihydroxybiphenyl, 125 parts by weight of hydroquinone, 292 parts by weight of terephthalic acid, 157 parts by weight of isophthalic acid and 1302 parts by weight of acetic anhydride (1.09 equivalents of the total amount of phenolic hydroxyl group) were mixed, were reacted with stirring in nitrogen atmosphere at 145°C for 1 hour, and were then heated by increasing the jacket temperature at an average rate of temperature increase of 0.64°C/minute from 145°C to 270°C and at an average rate of temperature increase of 1.3°C/minute from 270°C to 330°C. The heating time was 4 hours. The reaction further proceeded with keeping the polymerization temperature at 330°C and reducing the pressure to 1.0 mmHg (133 Pa) in 1.0 hour. The polymerization was terminated when the torque required for stirring reached 20 kg.cm. The reaction vessel was then pressurized to the internal pressure of 1.0 $kg/cm^2$ (0.1 MPa), and the polymer was discharged to form strands via nozzles, each having a circular outlet of 10 mm in diameter, and was pelletized with a cutter to give a liquid crystalline polyester resin (a-3).

According to the result of composition analysis of this liquid crystalline polyester resin (a-3), the ratio of the structural unit (I) to the sum of the structural unit (I), the structural unit (II) and the structural unit (III) was 70 mol%. The ratio of the structural unit (II) to the sum of the structural unit (II) and the structural unit (III) was 58 mol%. The ratio of the structural unit (IV) to the sum of the structural unit (IV) and the structural unit (V) was 65 mol%. The total amount of the structural unit (II) and the structural unit (III) was substantially equimolar with the total amount of the structural unit (IV) and the structural unit (V). Tm was 310°C; ΔS was $1.2\times10^{-3}$ J/g·K; the number-average molecular weight was 12,000; the degree of dispersion was 2.1; and the melt viscosity was 30 Pa·s.

As the results of measurement of the amounts of terminal groups by the above method, the amount of terminal hydroxyl group (a) was 153 equivalents/ ($g\cdot10^{-6}$), the amount of terminal acetyl group (b) was 41 equivalents/ ($g\cdot10^{-6}$), and the amount of terminal carboxyl group (c) was 143 equivalents/ ($g\cdot10^{-6}$). The ratio (a)/[(a)+(b)] of the amount of terminal hydroxyl group to the sum of the amount of terminal hydroxyl group and the amount of terminal acetyl group was 0.79.

[Preparation Example 4]

In a 5L reaction vessel with stirring blades and a distillation pipe, 994 parts by weight of p-hydroxybenzoic acid, 184 parts by weight of 4,4'-dihydroxybiphenyl, 89 parts by weight of hydroquinone, 179 parts by weight of terephthalic acid, 120 parts by weight of isophthalic acid and 1202 parts by weight of acetic anhydride (1.09 equivalents of the total amount of phenolic hydroxyl group) were mixed, were reacted with stirring in nitrogen atmosphere at 145°C for 1 hour, and were then heated by increasing the jacket temperature at an average rate of temperature increase of 0.81°C/minute from 145°C to 270°C and at an average rate of temperature increase of 1.0°C/minute from 270°C to 355°C. The heating time was 4 hours. The reaction further proceeded with keeping the polymerization temperature at 355°C and reducing the pressure to 1.0 mmHg (133 Pa) in 1.0 hour. The polymerization was terminated when the torque required for stirring reached 20 kg.cm. The reaction vessel was then pressurized to the internal pressure of 1.0 $kg/cm^2$ (0.1 MPa), and the polymer was discharged to form strands via nozzles, each having a circular outlet of 10 mm in diameter, and was pelletized with a cutter to give a liquid crystalline polyester resin (a-4).

According to the result of composition analysis of this liquid crystalline polyester resin (a-4), the ratio of the structural unit (I) to the sum of the structural unit (I), the structural unit (II) and the structural unit (III) was 80 mol%. The ratio of the structural unit (II) to the sum of the structural unit (II) and the structural unit (III) was 55 mol%. The ratio of the structural unit (IV) to the sum of the structural unit (IV) and the structural unit (V) was 60 mol%. The total amount of the structural unit (II) and the structural unit (III) was substantially equimolar with the total amount of the structural unit (IV) and the structural unit (V). Tm was 344°C; ΔS was $2.7\times10^{-3}$ J/g·K; the number-average molecular weight was 12,700; the degree of dispersion was 2.5; and the melt viscosity was 35 Pa·s.

As the results of measurement of the amounts of terminal groups by the above method, the amount of terminal hydroxyl group (a) was 134 equivalents/ ($g\cdot10^{-6}$), the amount of terminal acetyl group (b) was 29 equivalents/ ($g\cdot10^{-6}$), and the amount of terminal carboxyl group (c) was 124 equivalents/ ($g\cdot10^{-6}$). The ratio (a)/[(a)+(b)] of the amount of terminal hydroxyl group to the sum of the amount of terminal hydroxyl group and the amount of terminal acetyl group

was 0.82.

[Preparation Example 5]

In a 5L reaction vessel with stirring blades and a distillation pipe, 994 parts by weight of p-hydroxybenzoic acid, 235 parts by weight of 4,4'-dihydroxybiphenyl, 59 parts by weight of hydroquinone, 254 parts by weight of terephthalic acid, 45 parts by weight of isophthalic acid and 1202 parts by weight of acetic anhydride (1.09 equivalents of the total amount of phenolic hydroxyl group) were mixed, were reacted with stirring in nitrogen atmosphere at 145°C for 1 hour, and were then heated by increasing the jacket temperature at an average rate of temperature increase of 0.66°C/minute from 145°C to 270°C and at an average rate of temperature increase of 1.7°C/minute from 270°C to 365°C. The heating time was 4 hours. The reaction further proceeded with keeping the polymerization temperature at 365°C and reducing the pressure to 1.0 mmHg (133 Pa) in 1.0 hour. The polymerization was terminated when the torque required for stirring reached 20 kg.cm. The reaction vessel was then pressurized to the internal pressure of 1.0 $kg/cm^2$ (0.1 MPa), and the polymer was discharged to form strands via nozzles, each having a circular outlet of 10 mm in diameter, and was pelletized with a cutter to give a liquid crystalline polyester resin (a-5).

According to the result of composition analysis of this liquid crystalline polyester resin (a-5), the ratio of the structural unit (I) to the sum of the structural unit (I), the structural unit (II) and the structural unit (III) was 80 mol%. The ratio of the structural unit (II) to the sum of the structural unit (II) and the structural unit (III) was 70 mol%. The ratio of the structural unit (IV) to the sum of the structural unit (IV) and the structural unit (V) was 85 mol%. The total amount of the structural unit (II) and the structural unit (III) was substantially equimolar with the total amount of the structural unit (IV) and the structural unit (V). Tm was 354°C; $\Delta S$ was $3.1\times10^{-3}$ J/g·K; the number-average molecular weight was 11,400; the degree of dispersion was 2.8; and the melt viscosity was 29 Pa·s.

As the results of measurement of the amounts of terminal groups by the above method, the amount of terminal hydroxyl group (a) was 141 equivalents/ ($g\cdot10^{-6}$), the amount of terminal acetyl group (b) was 27 equivalents/ ($g\cdot10^{-6}$), and the amount of terminal carboxyl group (c) was 140 equivalents/ ($g\cdot10^{-6}$). The ratio (a)/[(a)+(b)] of the amount of terminal hydroxyl group to the sum of the amount of terminal hydroxyl group and the amount of terminal acetyl group was 0.84.

[Preparation Example 6]

(not part of the invention) In a 5L reaction vessel with stirring blades and a distillation pipe, 808 parts by weight of p-hydroxybenzoic acid, 352 parts by weight of 4,4'-dihydroxybiphenyl, 139 parts by weight of hydroquinone, 288 parts by weight of terephthalic acid, 235 parts by weight of isophthalic acid and 1352 parts by weight of acetic anhydride (1.09 equivalents of the total amount of phenolic hydroxyl group) were mixed, were reacted with stirring in nitrogen atmosphere at 145°C for 1 hour, and were then heated by increasing the jacket temperature at an average rate of temperature increase of 0.68°C/minute from 145°C to 270°C and at an average rate of temperature increase of 0.9°C/minute from 270°C to 320°C. The heating time was 4 hours. The reaction further proceeded with keeping the polymerization temperature at 320°C and reducing the pressure to 1.0 mmHg (133 Pa) in 1.0 hour. The polymerization was terminated when the torque required for stirring reached 20 kg.cm. The reaction vessel was then pressurized to the internal pressure of 1.0 $kg/cm^2$ (0.1 MPa), and the polymer was discharged to form strands via nozzles, each having a circular outlet of 10 mm in diameter, and was pelletized with a cutter to give a liquid crystalline polyester resin (a-6).

According to the result of composition analysis of this liquid crystalline polyester resin (a-6), the ratio of the structural unit (I) to the sum of the structural unit (I), the structural unit (II) and the structural unit (III) was 65 mol%. The ratio of the structural unit (II) to the sum of the structural unit (II) and the structural unit (III) was 60 mol%. The ratio of the structural unit (IV) to the sum of the structural unit (IV) and the structural unit (V) was 55 mol%. The total amount of the structural unit (II) and the structural unit (III) was substantially equimolar with the total amount of the structural unit (IV) and the structural unit (V). Tm was 303°C; $\Delta S$ was $0.8\times10^{-3}$ J/g·K; the number-average molecular weight was 13,500; the degree of dispersion was 2.7; and the melt viscosity was 43 Pa·s.

As the results of measurement of the amounts of terminal groups by the above method, the amount of terminal hydroxyl group (a) was 105 equivalents/ ($g\cdot10^{-6}$), the amount of terminal acetyl group (b) was 49 equivalents/ ($g\cdot10^{-6}$), and the amount of terminal carboxyl group (c) was 158 equivalents/ ($g\cdot10^{-6}$). The ratio (a)/[(a)+(b)] of the amount of terminal hydroxyl group to the sum of the amount of terminal hydroxyl group and the amount of terminal acetyl group was 0.68.

[Preparation Example 7]

(not part of the invention) In a 5L reaction vessel with stirring blades and a distillation pipe, 1057 parts by weight of p-hydroxybenzoic acid, 151 parts by weight of 4,4'-dihydroxybiphenyl, 59 parts by weight of hydroquinone, 202 parts

by weight of terephthalic acid, 22 parts by weight of isophthalic acid and 1152 parts by weight of acetic anhydride (1.09 equivalents of the total amount of phenolic hydroxyl group) were mixed, were reacted with stirring in nitrogen atmosphere at 145°C for 1 hour, and were then heated by increasing the jacket temperature at an average rate of temperature increase of 0.71°C/minute from 145°C to 270°C and at an average rate of temperature increase of 1.5°C/minute from 270°C to 365°C. The heating time was 4 hours. The reaction further proceeded with keeping the polymerization temperature at 365°C and reducing the pressure to 1.0 mmHg (133 Pa) in 1.0 hour. The polymerization was terminated when the torque required for stirring reached 20 kg.cm. The reaction vessel was then pressurized to the internal pressure of 1.0 $kg/cm^2$ (0.1 MPa), and the polymer was discharged to form strands via nozzles, each having a circular outlet of 10 mm in diameter, and was pelletized with a cutter to give a liquid crystalline polyester resin (a-7).

According to the result of composition analysis of this liquid crystalline polyester resin (a-7), the ratio of the structural unit (I) to the sum of the structural unit (I), the structural unit (II) and the structural unit (III) was 85 mol%. The ratio of the structural unit (II) to the sum of the structural unit (II) and the structural unit (III) was 60 mol%. The ratio of the structural unit (IV) to the sum of the structural unit (IV) and the structural unit (V) was 90 mol%. The total amount of the structural unit (II) and the structural unit (III) was substantially equimolar with the total amount of the structural unit (IV) and the structural unit (V). Tm was 351°C; $\Delta S$ was $3.2\times10^{-3}$ J/g·K; the number-average molecular weight was 12,200; the degree of dispersion was 2.6; and the melt viscosity was 31 Pa·s.

As the results of measurement of the amounts of terminal groups by the above method, the amount of terminal hydroxyl group (a) was 100 equivalents/ $(g\cdot10^{-6})$, the amount of terminal acetyl group (b) was 52 equivalents/ $(g\cdot10^{-6})$, and the amount of terminal carboxyl group (c) was 160 equivalents/ $(g\cdot10^{-6})$. The ratio (a)/[(a)+(b)] of the amount of terminal hydroxyl group to the sum of the amount of terminal hydroxyl group and the amount of terminal acetyl group was 0.66.

[Preparation Example 8]

In a 5L reaction vessel with stirring blades and a distillation pipe, 995 parts by weight of p-hydroxybenzoic acid, 126 parts by weight of 4,4'-dihydroxybiphenyl, 112 parts by weight of terephthalic acid, 216 parts by weight of polyethylene terephthalate and 969 parts by weight of acetic anhydride (1.09 equivalents of the total amount of phenolic hydroxyl group) were mixed, were reacted with stirring in nitrogen atmosphere at 130°C for 2 hours, and were then heated by increasing the jacket temperature at an average rate of temperature increase of 0.64°C/minute from 145°C to 270°C and at an average rate of temperature increase of 1.5°C/minute from 270°C to 335°C. The heating time was 4 hours. The reaction further proceeded with keeping the polymerization temperature at 335°C and reducing the pressure to 1.0 mmHg (133 Pa) in 1.0 hour. The polymerization was terminated when the torque required for stirring reached 20 kg·cm. The reaction vessel was then pressurized to the internal pressure of 1.0 $kg/cm^2$ (0.1 MPa), and the polymer was discharged to form strands via nozzles, each having a circular outlet of 10 mm in diameter, and was pelletized with a cutter to give a liquid crystalline polyester resin (a-8).

According to the result of composition analysis of this liquid crystalline polyester resin (a-8), the structural unit (I) was 66.7 mol%, the structural unit (II) was 6.3 mol%, the polyethylene terephthalate-derived ethylenedioxy unit was 10.4 mol%, and the structural unit (IV) was 16.6 mol%. Tm was 313°C; $\Delta S$ was $1.9\times10^{-3}$ J/g·K; the number-average molecular weight was 9,800; the degree of dispersion was 2.8; and the melt viscosity was 13 Pa·s.

As the results of measurement of the amounts of terminal groups by the above method, the amount of terminal hydroxyl group (a) was 97 equivalents/ $(g\cdot10^{-6})$, the amount of terminal acetyl group (b) was 100 equivalents/ $(g\cdot10^{-6})$, and the amount of terminal carboxyl group (c) was 205 equivalents/ $(g\cdot10^{-6})$. The ratio (a)/[(a)+(b)] of the amount of terminal hydroxyl group to the sum of the amount of terminal hydroxyl group and the amount of terminal acetyl group was 0.49.

[Preparation Example 9]

In a reaction vessel with a stirring device, a torque meter, a nitrogen gas introduction pipe, a thermostat and a reflux condenser, 994.5 parts by weight of p-hydroxybenzoic acid, 446.9 parts by weight of 4,4'-dihydroxybiphenyl, 299.0 parts by weight of terephthalic acid, 99.7 parts by weight of isophthalic acid and 1347.6 parts by weight of acetic anhydride were mixed. After sufficiently substituting the inside of the reaction vessel with nitrogen gas, the preparation procedure added 0.18 parts by weight of 1-methylimidazole, increased the temperature to 150°C under nitrogen gas stream in 30 minutes and refluxed the mixture for 30 minutes with keeping the temperature. The procedure subsequently added 2.4 parts by weight of 1-methylimidazole, increased the temperature to 320°C in 2 hours and 50 minutes with distilling away and removing acetic acid as by-product and unreacted acetic anhydride, took out the content on detection of a torque increase and cooled down the content to room temperature. After crushing the resulting solid substance with a coarse grinder, the procedure performed solid-phase polymerization under nitrogen atmosphere with increasing the temperature from room temperature to 250°C in 1 hour, further increasing the temperature from 250°C to 295°C in 5 hours and

keeping the temperature at 295°C for 3 hours. After the solid-phase polymerization, the resulting polymer was cooled down to give a liquid crystalline polyester resin (a-9).

According to the result of composition analysis of this liquid crystalline polyester resin (a-9), the structural unit (I) was 60 mol%, the structural unit (II) was 20 mol%, the structural unit (IV) was 15 mol%, and the structural unit (V) was 5 mol%. Tm was 351°C; ΔS was $3.1\times10^{-3}$ J/g.K; the number-average molecular weight was 16,200; the degree of dispersion was 3.2; and the melt viscosity was 34 Pa·s.

As the results of measurement of the amounts of terminal groups by the above method, the amount of terminal hydroxyl group (a) was 110 equivalents/ ($g\cdot10^{-6}$), the amount of terminal acetyl group (b) was 61 equivalents/ ($g\cdot10^{-6}$), and the amount of terminal carboxyl group (c) was 163 equivalents/ ($g\cdot10^{-6}$). The ratio (a)/[(a)+(b)] of the amount of terminal hydroxyl group to the sum of the amount of terminal hydroxyl group and the amount of terminal acetyl group was 0.64.

[Preparation Example 10]

In a 5L reaction vessel with stirring blades and a distillation pipe, 24.9 parts by weight of p-hydroxybenzoic acid, 812.9 parts by weight of 6-hydroxy-2-naphthoic acid, 419.0 parts by weight of 4,4'-dihydroxybiphenyl, 373.8 parts by weight of terephthalic acid and 964.8 parts by weight of acetic anhydride (1.05 equivalents of the total amount of phenolic hydroxyl group) were mixed, were reacted with stirring in nitrogen atmosphere at 145°C for 2 hours, and were subsequently heated to 360°C in 4 hours. The preparation procedure then kept the polymerization temperature at 360°C, pressurized the reaction vessel with nitrogen to 0.1 MPa and heated the mixture with stirring for 20 minutes. The procedure subsequently released the pressure to reduce the pressure to 133 Pa in 1.0 hour, further continued the reaction for 120 minutes and terminated polycondensation when the torque reached 12 kg.cm. The reaction vessel was then pressurized to the internal pressure of 0.1 MPa, and the polymer was discharged to form strands via nozzles, each having a circular outlet of 10 mm in diameter, and was pelletized with a cutter to give a liquid crystalline polyester resin (a-10).

This liquid crystalline polyester resin (a-10) had the structural unit (I) of 2 mol%, the 6-oxy-2-naphthalate unit of 48 mol%, the structural unit (II) of 25 mol% and the structural unit (IV) of 25 mol%. Tm was 350°C; ΔS was $2.8\times10^{-3}$ J/g·K; the number-average molecular weight was 11,200; and the melt viscosity was 25 Pa·s.

As the results of measurement of the amounts of terminal groups by the above method, the amount of terminal hydroxyl group (a) was 122 equivalents/ ($g\cdot10^{-6}$), the amount of terminal acetyl group (b) was 57 equivalents/ ($g\cdot10^{-6}$), and the amount of terminal carboxyl group (c) was 187 equivalents/ ($g\cdot10^{-6}$). The ratio (a)/[(a)+(b)] of the amount of terminal hydroxyl group to the sum of the amount of terminal hydroxyl group and the amount of terminal acetyl group was 0.68.

The compositions and the main properties of the liquid crystalline polyester resins obtained in the respective Preparation Examples are shown in Table 1.

[Table 1]

| | | *1 | *2 | *3 | *4 | *5 |
|---|---|---|---|---|---|---|
| PRE EX 1 | a-1 | 75 | 60 | 76 | 0.98 | 2.2 |
| PRE EX 2 | a-2 | 73 | 65 | 85 | 0.99 | 1.5 |
| PRE EX 3 | a-3 | 70 | 58 | 65 | 0.79 | 1.2 |
| PRE EX 4 | a-4 | 80 | 55 | 60 | 0.82 | 2.7 |
| PRE EX 5 | a-5 | 80 | 70 | 85 | 0.84 | 3.1 |
| PRE EX 6 | a-6 | 65 | 60 | 55 | 0.68 | 0.8 |
| PRE EX 7 | a-7 | 85 | 60 | 90 | 0.66 | 3.2 |
| PRE EX 8 | a-8 | *6 | | | 0.49 | 1.9 |
| PRE EX 9 | a-9 | *7 | | | 0.64 | 3.1 |

(continued)

| | | *1 | *2 | *3 | *4 | *5 |
|---|---|---|---|---|---|---|
| PRE EX 10 | a-10 | *8 | | | 0.68 | 2.8 |

*1 : (I) / [ (I) + (II) + (III) ] (mol%)
*2: (II)/[(II) + (III) ] (mol%)
*3: (IV)/[ (IV) + (V) ] (mol%)
*4: Ratio (a)/[(a)+(b)] of amount of terminal hydroxyl group (a) to sum of amount of terminal hydroxyl group (a) and amount of terminal acetyl group (b)
*5: $\Delta S/10^{-3} J/g \cdot K)$
*6: (I)/((II)/ethylenedioxy unit/(IV)=66.7/6.3/10.4/16.6
*7: (I)/(II)/(IV)/(V)=60/20/15/5
*8: (I)/6-oxy-2-naphthalate unit/ (II)/(IV) = 2/48/25/25

The following shows fillers used in respective Examples and Comparative Examples.

(B) Mica

(B-1) "A-21" manufactured by YAMAGUCHI MICA CO., LTD. (volume-average particle size before mixing: 22 μm);
(B-2) "A-41" manufactured by YAMAGUCHI MICA CO., LTD. (volume-average particle size before mixing: 47 μm);
(B-3) "AB-25s" manufactured by YAMAGUCHI MICA CO., LTD. (volume-average particle size before mixing: 47 μm);
(B-4) The above mica (B-1) was screened twice with a 400 mesh sieve, and mica powder left on the sieve was used;
(B-5) "M-200W" manufactured by Repco Inc. (volume-average particle size: 53 μm);
(B-6) "TM-20" manufactured by YAMAGUCHI MICA CO., LTD. (volume-average particle size before mixing: 18 μm);
(B-7) "NJ-030" manufactured by YAMAGUCHI MICA CO., LTD. (volume-average particle size before mixing: 30 μm);
(B-8) "NCF-322" manufactured by YAMAGUCHI MICA CO., LTD. (volume-average particle size before mixing: 24 μm);

(C) Glass Fiber

(C-1) "milled fiber EPG70M-01N" manufactured by Nippon Electric Glass Co., Ltd. (number-average fiber length: 70 μm, number-average fiber diameter: 9 μm)

(D) Talc

(D-1) "NK-48" manufactured by FUJI TALC INDUSTRIAL CO., LTD. (number-average particle size before mixing: 26 μm, oil absorption before mixing: 27 ml/ 100 g);
(D-2) "PKP-53" manufactured by FUJI TALC INDUSTRIAL CO., LTD. (number-average particle size before mixing: 18.5 μm, oil absorption before mixing: 30 ml/ 100 g);
(D-3) "P-6" manufactured by Nippon Talc Co., Ltd. (number-average particle size before mixing: 4.0 μm, oil absorption before mixing: 56 ml/ 100 g);
(D-4) "SG-2000" manufactured by Nippon Talc Co., Ltd. (number-average particle size before mixing: 1.0 μm, oil absorption before mixing: 58 ml/ 100 g);
(D-5) "ULLTRATALC 609" manufactured by Specialty Minerals Inc. (number-average particle size before mixing: 0.9 μm);

Examples 1 to 8 and 10 to 17, Comparative Examples 1 to 8 and 10 to 13

In a twin-screw extruder TEX 30α with cylinders C1 (main feeder-side heater) to C12 (die-side heater) manufactured by the Japan Steel Works, Ltd., a side feeder was placed in the cylinder C6 and a vacuum vent was placed in the cylinder C8. By using a screw arrangement with kneading disks built in the cylinders C3 and C7 (kneading clearance (c) of 0.5 mm), the liquid crystalline polyester resin (A) shown in Tables 2 to 4 was fed from the main feeder (feeder 1),

while the mica (B) and the other fillers were fed from the side feeder (feeder 2). The mixture was melt-kneaded at the cylinder temperature set to the melting point of the liquid crystalline polyester resin +10°C and the screw rotation speed of 150 rpm. Subsequently the liquid crystalline polyester resin composition discharged in the form of strands from the die was cooled down in a water cooling bath and was cut into pellets with a strand cutter. The obtained pellets were dried at 150°C for 3 hours with a hot air dryer and were evaluated for the properties (1) to (5) described later. The melt viscosity at the shear rate calculated from the extruder cylinder diameter, the screw rotation speed and the clearance of the kneading unit was evaluated as the melt viscosity at the maximum shear rate during kneading, using a Koka-type flow tester CFT-500D (orifice 0.5ϕ × 10 mm) (manufactured by Shimadzu Corporation) at the cylinder temperature during kneading set to the measurement temperature.

By heating 50 g of the obtained pellets at 550°C for 3 hours, the resin component was removed, and the mica included in the liquid crystalline polyester resin composition was isolated. The isolated mica was weighed by 100 mg, was dispersed in water and was measured using a laser diffraction/ scattering particle size distribution analyzer ("LA-300" manufactured by HORIBA, Ltd.), and the volume-average particle size was calculated. In the particle size distribution measured using the laser diffraction/ scattering particle size distribution analyzer, the particle size giving the cumulative solid particle mass of 50% to the whole solid particle mass was measured as the median size. The ratio of the volume-average particle size to the median size was then calculated. The isolated mica was also observed at 2000-fold magnification with a scanning electron microscope (SEM) ("JSM-6360LV" manufactured by JEOL Ltd.) The thicknesses of ten mica particles selected randomly from the SEM image were measured with adjustment of the observation direction and the observation angle, and their number-average value was calculated as the number-average thickness. The aspect ratio of mica was calculated as the volume-average particle size/ number-average thickness. When talc was contained in the composition, 100 mg of talc isolated from mica by utilizing the difference in specific gravity was weighed, was dispersed in water and was measured using the laser diffraction/ scattering particle size distribution analyzer ("LA-300" manufactured by HORIBA, Ltd.), and the number-average particle size was calculated. The oil absorption was measured in conformity with JIS K-5101 (established on February 20, 2004).

Example 9

In a twin-screw extruder TEX 44 with cylinders C1 (main feeder-side heater) to C12 (die-side heater) manufactured by the Japan Steel Works, Ltd., a side feeder was placed in the cylinder C6 and a vacuum vent was placed in the cylinder C8. By using a screw arrangement with kneading disks built in the cylinders C3 and C7 (kneading clearance (c) of 0.9 mm), the liquid crystalline polyester resin (A) shown in Table 2 was fed from the main feeder (feeder 1), while the mica (B) was fed from the side feeder (feeder 2). The mixture was melt-kneaded at the cylinder temperature set to the melting point of the liquid crystalline polyester resin and the screw rotation speed of 350 rpm. Subsequently the liquid crystalline polyester resin composition discharged in the form of strands from the die was cooled down in a water cooling bath and was cut into pellets with the strand cutter. The obtained pellets were dried at 150°C for 3 hours with the hot air dryer and were evaluated for the properties (1) to (5) described later. By heating the obtained pellets, the resin component was removed, and the mica included in the liquid crystalline polyester resin composition was isolated. The isolated mica was subject to the measurement described above. The melt viscosity at the shear rate calculated from the extruder cylinder diameter, the screw rotation speed and the kneading clearance was evaluated as the melt viscosity at the maximum shear rate during kneading, using the Koka-type flow tester CFT-500D (orifice 0.5ϕ × 10 mm) (manufactured by Shimadzu Corporation) at the cylinder temperature during kneading set to the measurement temperature.

Comparative Example 9

Comparative Example 9 melt-kneaded the mixture and obtained pellets by the same procedure as Example 9, except that the cylinder temperature was set to the melting point of the liquid crystalline polyester resin +10°C and the screw rotation speed was set to 250 rpm. The obtained pellets were dried at 150°C for 3 hours with the hot air dryer and were evaluated for the properties (1) to (5) described later. By heating the obtained pellets, the resin component was removed, and the mica included in the liquid crystalline polyester resin composition was isolated. The isolated mica was subject to the measurement described above. The melt viscosity at the shear rate calculated from the extruder cylinder diameter, the screw rotation speed and the kneading clearance was evaluated as the melt viscosity at the maximum shear rate during kneading, using the Koka-type flow tester CFT-500D (orifice 0.5ϕ × 10 mm) (manufactured by Shimadzu Corporation) at the cylinder temperature during kneading set to the measurement temperature.

The following describes the evaluation methods of the respective properties.

(1) Flowability

The liquid crystalline polyester resin composition obtained in each of Examples and Comparative Examples

was injection molded by 20 shots using FANUC ROBOSHOT α-30C (manufactured by FANUC Corporation) with a mold for a molded product of 5.0 mm in width × 50 mm in length × 0.2 mm in thickness under the molding conditions of the cylinder temperature set to the melting point Tm of the liquid crystalline polyester resin +20°C, the mold temperature set to 90°C and the injection speed of 400 m/s. The flow length at 5.0 mm in width × 0.2 mm in thickness was measured as the number-average value. The greater number-average value indicates the better flowability.

(2) Flexural Properties

The liquid crystalline polyester resin composition obtained in each of Examples and Comparative Examples was injection molded to a test piece of 12.6 mm in width × 127 mm in length × 3.2 mm in thickness using FANUC ROBOSHOT α-30C (manufactured by FANUC Corporation) under the conditions of the cylinder temperature set to the melting point of the liquid crystalline polyester resin +10°C and the mold temperature set to 90°C. The flexural strength and flexural strain at break of the test piece were measured at the measurement temperature of 23°C in conformity with ASTM D-790. The number n of tests was 3, and the obtained value was the average value of the three tests. The greater flexural strength indicates the better flexural properties and the higher strength. The greater flexural strain at break indicates the better flexural properties and the higher toughness.

(3) Impact Strength

The liquid crystalline polyester resin composition obtained in each of Examples and Comparative Examples was injection molded to a test piece of 12.6 mm in width × 63.5 mm in length × 3.2 mm in thickness using FANUC ROBOSHOT α-30C (manufactured by FANUC Corporation) under the conditions of the cylinder temperature set to the melting point of the liquid crystalline polyester resin +10°C and the mold temperature set to 90°C. The impact absorbing energy of the test piece was measured at the measurement temperature of 23°C in conformity with ASTM D-256. The number n of tests was 10, and the obtained value was the average value of the ten tests. The greater value indicates the higher impact strength and the higher toughness.

(4) Warpage

The liquid crystalline polyester resin composition obtained in each of Examples and Comparative Examples was molded to a fine pitch connector using FANUC ROBOSHOT α-30C (manufactured by FANUC Corporation) with a 0.3 mm-pitch 70-core fine pitch connector mold (wall thickness of 0.2 mm) at the cylinder temperature set to the melting point of the liquid crystalline polyester resin +10°C in the measurement time for measurement of 8 mm under the back pressure of 2.0 MPa. By using a reflow simulator core 9030c (manufactured by CORES Corporation), the fine pitch connector was subjected to a reflow process that raised the temperature to 200°C at the temperature increase rate of 1.6°C/ second, preheated for 2 minutes, reflowed at the maximum surface temperature of 260°C for 30 seconds and then cooled down to room temperature. The warpage after the reflow process was measured. The number n of tests was 5, and the obtained value was the average value of the five tests.

The "warpage" herein is the maximum displacement of the bottom face of the fine pitch connector relative to a horizontal surface plate measured using a universal projector (V-16A (manufactured by Nikon Corporation)) when the longitudinal direction of the fine pitch connector was placed on the horizontal surface plate. Fig. 1 is a conceptual diagram illustrating a measurement site of warpage, where numeral symbol 1 represents the pin press-fitting direction and numerical symbol 2 represents the connector longitudinal direction. The measured maximum displacement of the bottom face of the fine pitch connector relative to the horizontal surface plate is shown as numerical symbol 3 in Fig. 1 and represents warpage.

(5) Resistance to Tracking Breakdown

The liquid crystalline polyester resin composition obtained in each of Examples 12 to 17 and Comparative Examples 12 and 13 was molded to a rectangular plate of 50 mm × 80 mm × 1 mm in thickness using FANUC ROBOSHOT α-30C (manufactured by FANUC Corporation) at the cylinder temperature set to the melting point of the liquid crystalline polyester resin +10°C. The comparative tracking index (CTI) of the rectangular plate was measured according to IEC 112 test (solution A). The number n of tests was 5, and the obtained value was the average value of the five tests. The higher comparative tracking index indicates the higher resistance to tracking breakdown.

(6) Tribological Property

The liquid crystalline polyester resin composition obtained in each of Examples 1 to 11 and Comparative

Examples 1 to 11 was molded to a rectangular plate of 30 mm × 30 mm × 3.2 mm using FANUC ROBOSHOT α-30C (manufactured by FANUC Corporation). The abrasion of the rectangular plate was measured using a thrust-type abrasion tester (Suzuki abrasion tester) with an aluminum alloy (5056) as the counterpart material under the conditions of the load P= 5 kgf/$cm^2$ and the velocity V= 20 m/min. The number n of tests was 5, and the obtained value was the average value of the five tests. The less abrasion indicates the better tribological property.

(7) Flexural Fatigue Characteristic

The liquid crystalline polyester resin composition obtained in each of Examples and Comparative Examples was molded to a cantilevered flexural fatigue test piece "TYPE A" in conformity with ASTM D671 using FANUC ROBOSHOT α-30C (manufactured by FANUC Corporation). By using a repeated vibration fatigue tester B-20 (manufactured by Toyo Seiki Seisaku-Sho, Ltd.), the test piece was subjected to a flexural fatigue test in conformity with ASTM D671 Method B at room temperature and the frequency of 30 Hz, and the stress after 10000 times was measured. The number n of tests was 3, and the obtained value was the average value of the three tests. The greater stress indicates the better flexural fatigue characteristic.

[Table 2]

| | *1 | *2 | *3 | *5 | | | | *10 | *11 | *12 | | *15 | *16 | *17 | *18 |
|---|---|---|---|---|---|---|---|---|---|---|---|---|---|---|---|
| | | | *4 | *6 | *7 | *8 | *9 | | | *13 | *14 | | | | |
| EX 1 | a-1(100) | B-1(60) | 0.98 | 21 | 66 | 0.32 | 1.02 | 32 | 45.2 | 138 | 3.2 | 45 | 0.08 | 42 | 38 |
| EX 2 | a-1(100) | B-2(43) | 0.98 | 48 | 69 | 0.70 | 1.04 | 68 | 40.2 | 140 | 3.3 | 48 | 0.07 | 45 | 39 |
| EX 3 | a-1(100) | B-3(33) | 0.98 | 26 | 76 | 0.34 | 1.01 | 48 | 43.4 | 145 | 3.5 | 50 | 0.04 | 42 | 38 |
| EX 4 | a-1(100) | B-4(43) | 0.98 | 29 | 94 | 0.31 | 1.18 | 41 | 46.2 | 147 | 3.8 | 52 | 0.03 | 27 | 51 |
| EX 5 | a-2(100) | B-4(43) | 0.99 | 28 | 93 | 0.30 | 1.15 | 38 | 44.5 | 145 | 3.7 | 50 | 0.05 | 25 | 50 |
| EX 6 | a-3(100) | B-4(43) | 0.79 | 28 | 93 | 0.30 | 1.18 | 45 | 42.1 | 141 | 3.4 | 45 | 0.08 | 29 | 45 |
| EX 7 | a-4(100) | B-4(43) | 0.82 | 28 | 90 | 0.31 | 1.13 | 85 | 41.8 | 140 | 3.3 | 44 | 0.08 | 29 | 46 |
| EX 8 | a-5(100) | B-4(43) | 0.84 | 28 | 93 | 0.30 | 1.10 | 47 | 39.8 | 138 | 3.0 | 39 | 0.10 | 27 | 49 |
| EX 9 | a-3(100) | B-8(33) | 0.79 | 18 | 95 | 0.19 | 1.08 | 98 | 41.5 | 138 | 3.0 | 40 | 0.09 | 35 | 45 |
| EX 10 | a-1(100) | B-2(10)<br>B-3(33) | 0.98 | 33 | 92 | 0.36 | 1.22 | 38 | 45.8 | 146 | 3.7 | 53 | 0.03 | 30 | 51 |
| EX 11 | a-1(100) | B-1(20)<br>C-1(10) | 0.98 | 21 | 68 | 0.31 | 1.04 | 120 | 38.9 | 170 | 3.1 | 60 | 0.08 | 42 | 58 |

*1 : Liquid crystalline polyester resin (parts by weight) *10: Melt viscosity (Pa·s) during kneading
*2: Mica and other fillers (parts by weight) *11: Flowability (mm)
*3: Liquid crystalline polyester resin *12: Flexural properties
*4: (a)/[(a) +(b)] *13: Strength (MPa)
*5: Mica in composition *14: Strain at break (mm)
*6: Volume-average particle size (μm) *15 : Impact strength (J/m)
*7: Aspect ratio *16: Post-reflow warpage (mm)
*8: Number-average thickness (μm) *17: Tribological property (μg/h)
*9: Volume average particle size/ Median size *18: Flexural fatigue characteristic (MPa)

[Table 3]

| | *1 | *2 | *3 | *5 | | | | *10 | *11 | *12 | | *15 | *16 | *17 | *18 |
|---|---|---|---|---|---|---|---|---|---|---|---|---|---|---|---|
| | | | *4 | *6 | *7 | *8 | *9 | | | *13 | *14 | | | | |
| COMP EX 1 | a-6(100) | B-2(43) | 0.68 | 47 | 68 | 0.69 | 1.05 | 108 | 36.5 | 134 | 2.7 | 34 | 0.14 | 79 | 28 |
| COMP EX 2 | a-7(100) | B-2(43) | 0.66 | 48 | 69 | 0.70 | 1.05 | 58 | 35.5 | 133 | 2.6 | 33 | 0.15 | 92 | 28 |
| COMP EX 3 | a-8(100) | B-2(43) | 0.49 | 48 | 68 | 0.71 | 1.05 | 18 | 37.8 | 128 | 2.2 | 33 | 0.18 | 80 | 24 |
| COMP EX 4 | a-9(100) | B-3(43) | 0.64 | 27 | 79 | 0.35 | 1.01 | 42 | 28.8 | 131 | 2.4 | 30 | 0.19 | 87 | 30 |
| COMP EX 5 | a-10(100) | B-3(43) | 0.68 | 26 | 76 | 0.34 | 1.01 | 32 | 27.6 | 130 | 2.6 | 33 | 0.18 | 85 | 30 |
| COMP EX 6 | a-2(100) | B-5(43) | 0.99 | 52 | 43 | 1.20 | 1.04 | 38 | 28.9 | 118 | 2.5 | 33 | 0.17 | 90 | 33 |
| COMP EX 7 | a-2(100) | B-6(43) | 0.99 | 16 | 133 | 0.12 | 1.04 | 210 | 32.2 | 139 | 2.1 | 25 | 0.14 | 125 | 32 |
| COMP EX 8 | a-2(100) | B-7(43) | 0.99 | 30 | 27 | 1.10 | 1.03 | 48 | 29.7 | 111 | 2.6 | 32 | 0.19 | 80 | 33 |
| COMP EX 9 | a-3(100) | B-8(33) | 0.85 | 22 | 110 | 0.20 | 1.01 | 15 | 33 | 138 | 2.1 | 30 | 0.10 | 110 | 30 |
| COMP EX 10 | a-2(100) | B-1(122) | 0.99 | 20 | 63 | 0.32 | 1.02 | 235 | 25.5 | 140 | 2.0 | 25 | 0.13 | 235 | 31 |
| COMP EX 11 | a-2(100) | B-2(5) | 0.99 | 48 | 69 | 0.70 | 1.04 | 40 | 41.5 | 120 | 3.0 | 38 | 0.21 | 45 | 34 |

*1 : Liquid crystalline polyester resin (parts by weight)
*2: Mica and other fillers (parts by weight)
*3: Liquid crystalline polyester resin
*4: (a)/[ (a) + (b)]
*5: Mica in composition
*6: Volume-average particle size (μm)
*7: Aspect ratio
*8 : Number-average thickness (μm)
*9: Volume average particle size/ Median size
*10: Melt viscosity (Pa·s) during kneading
*11 : Flowability (mm)
*12: Flexural properties
*13: Strength (MPa)
*14: Strain at break (mm)
*15: Impact strength (J/m)
*16: Post-reflow warpage (mm)
*17 : Tribological property (μg/h)
*18: Flexural fatigue characteristic (MPa)

[Table 4]

| | *1 | *2 | *3 | *5 | | | | *10 | *11 | | *14 | *15 | *16 | *17 |
|---|---|---|---|---|---|---|---|---|---|---|---|---|---|---|
| | | | *4 | *6 | *7 | *8 | *9 | | *12 | *13 | | | | |
| EX 12 | a-1(100) | B-4(33) D-1(10) | 0.98 | 29 | 90 | 0.32 | 1.18 | 46.2 | 142 | 3.3 | 47 | 0.04 | 300 | 50 |
| EX 13 | a-1(100) | B-4(33) D-2(10) | 0.98 | 28 | 90 | 0.31 | 1.17 | 46.5 | 142 | 3.2 | 48 | 0.04 | 300 | 50 |
| EX 14 | a-1(100) | B-4(33) D-3(10) | 0.98 | 29 | 91 | 0.32 | 1.17 | 47.2 | 143 | 3.4 | 46 | 0.05 | 350 | 52 |
| EX 15 | a-1(100) | B-4(28) D-4(14) | 0.98 | 29 | 91 | 0.32 | 1.18 | 47.9 | 146 | 3.6 | 47 | 0.05 | 375 | 54 |
| EX 16 | a-1(100) | B-4(28) D-5(14) | 0.98 | 28 | 90 | 0.31 | 1.18 | 48.6 | 145 | 3.4 | 45 | 0.06 | 375 | 53 |
| EX 17 | a-1(100) | B-4(21) D-5(21) | 0.98 | 28 | 92 | 0.30 | 1.18 | 49.3 | 139 | 3.3 | 42 | 0.08 | 375 | 50 |
| COMP EX 12 | a-8(100) | B-2(28) D-4(14) | 0.49 | 47 | 69 | 0.68 | 1.04 | 38.1 | 120 | 1.5 | 21 | 0.23 | 100 | 34 |
| COMP EX 13 | a-2(100) | B-6(28) D-4(14) | 0.99 | 17 | 138 | 0.12 | 1.03 | 32.8 | 131 | 1.7 | 19 | 0.18 | 125 | 32 |

*1 : Liquid crystalline polyester resin (parts by weight)
*2: Mica and other fillers (parts by weight)
*3: Liquid crystalline polyester resin
*4: (a)/[(a)+(b)]
*5: Mica in composition
*6: Volume-average particle size (μm)
*7: Aspect ratio
*8: Number-average thickness (μm)
*9: Volume average particle size/ Median size
*10: Flowability (mm)
*11 : Flexural properties
*12: Strength (MPa)
*13: Strain at break (mm)
*14: Impact strength (J/m)
*15: Post-reflow warpage (mm)
*16: Resistance to tracking breakdown (V)
*17: Flexural fatigue characteristic (MPa)

As shown in Tables 2 and 3, compared with the liquid crystalline polyester rein compositions of Comparative Examples 1 to 11, the liquid crystalline polyester resin compositions of Examples 1 to 11 including the liquid crystalline polyester resin having the specified terminal structure and the mica having the specified particle size and the specified aspect ratio according to the embodiment of the invention have the better flowability, the higher flexural strength and the less warpage. The liquid crystalline polyester resin composition according to the embodiment of the invention achieves a good balance of the high reinforcement effects of mica with the excellent toughness such as flexural strain at break and impact strength. Additionally, the liquid crystalline polyester resin composition according to the embodiment of the invention has the good tribological property and the good flexural fatigue characteristic. The liquid crystalline polyester resin composition including mica having the ratio of the volume-average particle size to the median size of 1.05 to 1.30 has the good tribological property and the good flexural fatigue characteristic and is especially suitable for components having engagement elements.

As clearly shown in Table 4, the liquid crystalline polyester resin compositions of Examples 12 to 17 including the liquid crystalline polyester resin having the specified terminal structure, the mica having the specified particle size

and the specified aspect ratio and talc ensure the significantly good flowability and the extremely high resistance to tracking breakdown, while having the high flexural strength, the low warpage and the high toughness such as flexural strain at break and impact strength.

Description of Symbols

1: Pin press-fitting direction
2: Connector longitudinal direction
3: Warpage

Industrial Applicability

The liquid crystalline polyester resin composition according to the embodiment of the invention has good flowability, high flexural strength and low warpage and thereby the reinforcement effects of mica, further has the excellent toughness such as flexural strain at break and impact strength, and additionally provides a good balance of these characteristics. The liquid crystalline polyester resin composition according to the embodiment of the invention is useful for molded products that need the strength and the toughness or more specifically for connectors. The liquid crystalline polyester resin composition including talc in addition to the liquid crystalline polyester resin having the specified terminal structure and the mica having the specified particle size and the specified aspect ratio has high resistance to tracking breakdown, good tribological property and good flexural fatigue characteristic, in addition to the flowability, the flexural strength, the low warpage and the toughness and is especially suitable for electric and electronic components.

## Claims

**1.** A liquid crystalline polyester resin composition, comprising:

100 parts by weight of a liquid crystalline polyester (A) having a ratio (a)/[(a)+(b)] of an amount of terminal hydroxyl group (a) to a sum of the amount of terminal hydroxyl group (a) and an amount of terminal acetyl group (b) which is 0.70 to 1.00; and
10 to 100 parts by weight of a mica (B), wherein

the mica (B) included in the liquid crystalline polyester resin composition has a volume-average particle size of 10 to 50 $\mu$m, and
the mica (B) has an aspect ratio of 50 to 100.

**2.** The liquid crystalline polyester resin composition according to claim 1,
wherein the liquid crystalline polyester (A) has $\Delta S$ (entropy of melting) defined by Equation 1 of 1.0 to $3.0\times10^{-3}$ J/g·K:

$$\Delta S = \Delta Hm / Tm \qquad [1]$$

(where $\Delta Hm$ denotes a melting heat quantity, and Tm denotes a melting point).

**3.** The liquid crystalline polyester resin composition according to either claim 1 or claim 2,
wherein the liquid crystalline polyester (A) has structural units (I), (II), (III), (IV) and (V) given below:

[Chem. 1]

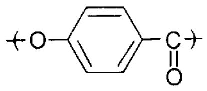
(I)

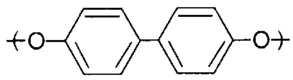
(II)

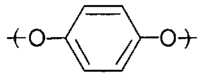
(III)

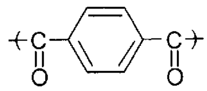
(IV)

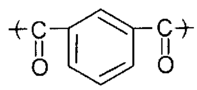
(V)

wherein the structural unit (I) is 68 to 80 mol% relative to a sum of the structural units (I), (II) and (III), the structural unit (II) is 55 to 75 mol% relative to a sum of the structural units (II) and (III), the structural unit (IV) is 60 to 85 mol% relative to a sum of the structural unit (IV) and (V), and the sum of the structural units (II) and (III) is substantially equimolar with the sum of the structural units (IV) and (V).

**4.** The liquid crystalline polyester resin composition according to any of claims 1 to 3, wherein the mica (B) included in the liquid crystalline polyester resin composition has a number-average thickness of 0.15 $\mu$m to 0.90 $\mu$m.

**5.** The liquid crystalline polyester resin composition according to any of claims 1 to 4, wherein the mica (B) included in the liquid crystalline polyester resin composition has a ratio of the volume-average particle size to a median size measured by cumulative particle size distribution of 1.05 to 1.30.

**6.** The liquid crystalline polyester resin composition according to any of claims 1 to 5, further comprising:

5 to 70 parts by weight of a talc (D) relative to 100 parts by weight of the liquid crystalline polyester (A).

**7.** A production method of the liquid crystalline polyester resin composition according to any of claims 1 to 6, comprising melt-kneading at least the liquid crystalline polyester (A) and the mica (B) using a screw arrangement including at least one kneading disk; and controlling a melt viscosity at a maximum shear rate ($\gamma$) of a kneading disk unit in an extruder calculated from a temperature during melt-kneading and a screw rotation speed during kneading according to Equation 2 to 30 Pa·s to 200 Pa·s:

$$\gamma = \pi \times D \times N / (60 \times c) \qquad [2]$$

(where D represents a screw diameter, N represents a screw rotation speed and c represents a clearance of the kneading disk unit).

**8.** A molded product produced by injection molding the liquid crystalline polyester resin composition according to any of claims 1 to 6.

**9.** A connector made from the liquid crystalline polyester resin composition according to any of claims 1 to 6.

**Patentansprüche**

1. Flüssigkristallpolyesterharz-Zusammensetzung, die Folgendes umfasst:

   100 Gewichtsteile eines Flüssigkristallpolyesters (A), der ein Verhältnis von (a)/[(a)+(b)] einer Menge an terminaler Hydroxylgruppe (a) zu einer Summe der Menge an terminaler Hydroxylgruppe (a) und einer Menge an terminaler Acetylgruppe (b) aufweist, das 0,70 bis 1,00 beträgt; und
   10 bis 100 Gewichtsteile eines Glimmers (B), worin

   der in der Flüssigkristallpolyesterharz-Zusammensetzung enthaltene Glimmer (B) eine volumenmittlere Teilchengröße von 10 bis 50 μm aufweist und
   der Glimmer (B) einen Formfaktor von 50 bis 100 aufweist.

2. Flüssigkristallpolyesterharz-Zusammensetzung nach Anspruch 1,
   worin der Flüssigkristallpolyester (A) eine ΔS (Schmelzentropie) aufweist, die durch Gleichung 1 von 1,0 bis 3,0 x $10^{-3}$ J/g·K definiert ist:

$$\Delta S = \Delta Hm / Tm \qquad [1]$$

   (wobei ΔHm eine Schmelzwärmemenge bezeichnet und Tm einen Schmelzpunkt bezeichnet).

3. Flüssigkristallpolyesterharz-Zusammensetzung nach Anspruch 1 oder Anspruch 2,
   worin der Flüssigkristallpolyester (A) die unten dargestellten Struktureinheiten (I), (II), (III), (IV) und (V) aufweist:

[Chem. 1]

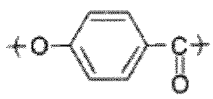
(I)

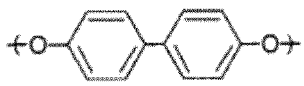
(II)

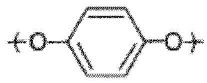
(III)

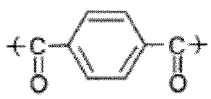
(IV)

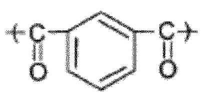
(V)

   worin die Struktureinheit (I) 68 bis 80 Mol-% bezogen auf eine Summe der Struktureinheiten (I), (II) und (III) beträgt,
   die Struktureinheit (II) 55 bis 75 Mol-% bezogen auf eine Summe der Struktureinheiten (II) und (III) beträgt,
   die Struktureinheit (IV) 60 bis 85 Mol-% bezogen auf eine Summe der Struktureinheit (IV) und (V) beträgt und
   die Summe der Struktureinheiten (II) und (III) im Wesentlichen äquimolar zu der Summe der Struktureinheiten (IV) und (V) ist.

4. Flüssigkristallpolyesterharz-Zusammensetzung nach einem der Ansprüche 1 bis 3,
   worin der in der Flüssigkristallpolyesterharz-Zusammensetzung enthaltene Glimmer (B) eine zahlenmittlere Dicke von 0,15 μm bis 0,90 μm aufweist.

5. Flüssigkristallpolyesterharz-Zusammensetzung nach einem der Ansprüche 1 bis 4, worin der in der Flüssigkristallpolyesterharz-Zusammensetzung enthaltene Glimmer (B) ein Verhältnis der volumenmittleren Teilchengröße zu einer Mediangröße, die durch die kumulative Teilchengrößenverteilung gemessen wird, von 1,05 bis 1,30 aufweist.

6. Flüssigkristallpolyesterharz-Zusammensetzung nach einem der Ansprüche 1 bis 5, die weiters Folgendes umfasst:

   5 bis 70 Gewichtsteile eines Talks (D) bezogen auf 100 Gewichtsteile des Flüssigkristallpolyesters (A).

7. Herstellverfahren der Flüssigkristallpolyesterharz-Zusammensetzung nach einem der Ansprüche 1 bis 6, welches das Schmelzkneten von zumindest dem Flüssigkristallpolyester (A) und dem Glimmer (B) unter Verwendung einer Schraubenanordnung, umfassend zumindest eine Knetscheibe; und das Kontrollieren einer Schmelzviskosität bei einer maximalen Schergeschwindigkeit (y) einer Knetscheibeneinheit in einem Extruder umfasst, die von einer Temperatur während des Schmelzknetens und einer Schraubendrehgeschwindigkeit während des Knetens gemäß Gleichung 2 von 30 Pa·s bis 200 Pa·s berechnet wird:

$$\gamma = \pi \times D \times N / (60 \times c) \qquad [2]$$

   (wobei D für einen Schraubendurchmesser steht, N für eine Schraubendrehgeschwindigkeit steht und c für einen Abstand der Knetscheibeneinheit steht).

8. Formstück, das durch Spritzgießen der Flüssigkristallpolyesterharz-Zusammensetzung nach einem der Ansprüche 1 bis 6 erzeugt ist.

9. Verbindungsstück, das aus der Flüssigkristallpolyesterharz-Zusammensetzung nach einem der Ansprüche 1 bis 6 hergestellt ist.

**Revendications**

1. Composition de résine polyester à cristaux liquides, comprenant :

   100 parties en poids d'un polyester à cristaux liquides (A) ayant un rapport (a)/[(a)+(b)] d'une quantité de groupes hydroxyle terminaux (a) sur une somme de la quantité de groupes hydroxyle terminaux (a) et une quantité de groupes acétyle terminaux (b) qui est de 0,70 à 1,00 ; et
   10 à 100 parties en poids d'un mica (B), dans laquelle

   le mica (B) inclus dans la composition de résine polyester à cristaux liquides a une taille de particule moyenne en volume de 10 à 50 μm, et
   le mica (B) a un rapport d'aspect de 50 à 100.

2. Composition de résine polyester à cristaux liquides selon la revendication 1, dans laquelle le polyester à cristaux liquides (A) a ΔS (entropie de fusion) définie par l'équation 1 de 1,0 à 3,0 x $10^{-3}$ J/g K :

$$\Delta S = \Delta Hm / Tm \qquad [1]$$

   (où ΔHm désigne une quantité de chaleur de fusion, et Tm désigne un point de fusion).

3. Composition de résine polyester à cristaux liquides selon la revendication 1 ou la revendication 2, dans laquelle le polyester à cristaux liquides (A) comprend des unités structurelles (I), (II), (III), (IV) et (V) données ci-dessous :

[Chem. 1]

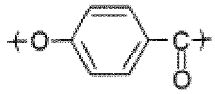
(I)

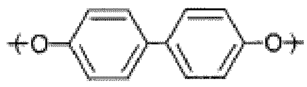
(II)

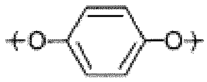
(III)

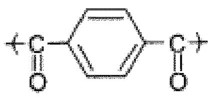
(IV)

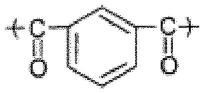
(V)

dans laquelle l'unité structurelle (I) est de 68 à 80 % en moles par rapport à une somme des unités structurelles (I), (II) et (III),
l'unité structurelle (II) est de 55 à 75 % en moles par rapport à une somme des unités structurelles (II) et (III),
l'unité structurelle (IV) est de 60 à 85 % en moles par rapport à une somme des unités structurelles (IV) et (V), et la somme des unités structurelles (II) et (III) est pratiquement équimolaire par rapport à la somme des unités structurelles (IV) et (V).

**4.** Composition de résine polyester à cristaux liquides selon l'une quelconque des revendications 1 à 3,
dans laquelle le mica (B) inclus dans la composition de résine polyester à cristaux liquides a une épaisseur moyenne en nombre de 0,15 μm à 0,90 μm.

**5.** Composition de résine polyester à cristaux liquides selon l'une quelconque des revendications 1 à 4,
dans laquelle le mica (B) inclus dans la composition de résine polyester à cristaux liquides présente un rapport de la taille de particule moyenne en volume sur une taille moyenne, mesuré par distribution de taille de particule cumulée de 1,05 à 1,30.

**6.** Composition de résine polyester à cristaux liquides selon l'une quelconque des revendications 1 à 5, comprenant en outre :

5 à 70 parties en poids d'un talc (D), par rapport à 100 parties en poids du polyester à cristaux liquides (A).

**7.** Procédé de production de la composition de résine polyester à cristaux liquides selon l'une quelconque des revendications 1 à 6, comprenant
le malaxage à l'état fondu d'au moins le polyester à cristaux liquides (A) et le mica (B) en utilisant un dispositif à vis comprenant au moins un disque de malaxage ; et
le contrôle d'une viscosité à l'état fondu à un taux de cisaillement maximum (γ) d'une unité de disque de malaxage dans une extrudeuse calculée à partir d'une température au cours du malaxage à l'état fondu et d'une vitesse de rotation des vis pendant le malaxage selon l'équation 2 à 30 Pa·s à 200 Pa·s :

$$\gamma = \pi \times D \times N / (60 \times c) \qquad [2]$$

(où D représente un diamètre de vis, N représente une vitesse de rotation de vis et c représente un dégagement de l'unité de disque de malaxage).

**8.** Produit moulé produit par moulage par injection de la composition de résine polyester à cristaux liquides selon l'une

quelconque des revendications 1 à 6.

**9.** Connecteur fabriqué à partir de la composition de résine polyester à cristaux liquides selon l'une quelconque des revendications 1 à 6.

Fig.1

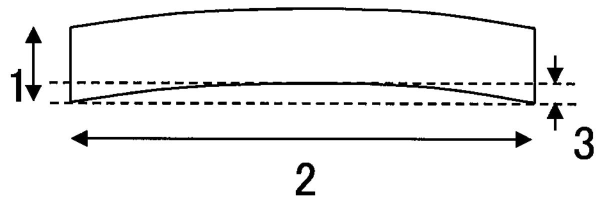

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012021147 B
- US 6797198 B
- JP H04202558 A
- JP 2003321598 A
- JP 2012021147 A
- JP 2004352862 A
- JP 2009179693 A